# EUROPÄISCHE PATENTSCHRIFT

(11) **EP 2 637 987 B1**
(45) Veröffentlichungstag und Bekanntmachung des Hinweises auf die Patenterteilung: **06.08.2014**
(21) Anmeldenummer: 11784940.6
(22) Anmeldetag: 31.10.2011
(51) Int. Cl.: C04B 38/00

(54) **KERAMIK AUS PRÄKERAMISCHEN PAPIER- UND/ODER PAPPSTRUKTUREN**
CERAMIC MADE OF PRECERAMIC PAPER AND/OR CARDBOARD STRUCTURES
CÉRAMIQUE CONSTITUÉE DE STRUCTURES DE PAPIER ET/OU DE CARTON PRÉCÉRAMIQUES

(30) Priorität: 07.06.2011 DE 102011116100; 05.10.2011 DE 102011114843; 07.06.2011 DE 102011104141; 09.02.2011 DE 202011105717 U; 09.02.2011 DE 102011010800; 02.02.2011 DE 102011010179; 01.12.2010 DE 102010052906; 09.11.2010 DE 102010050641
(43) Veröffentlichungstag der Anmeldung: 18.09.2013
(73) Patentinhaber: Atech Innovations GmbH, 45966 Gladbeck (DE)
(72) Erfinder: BOLDUAN, Peter, 49549 Ladbergen (DE)
(74) Vertreter: von Rohr, Hans Wilhelm
(86) Internationale Anmeldenummer: PCT/EP2011/005488
(87) Internationale Veröffentlichungsnummer: WO 2012/062424

(56) Entgegenhaltungen:
- EP-A1- 1 666 123
- WO-A1-2006/005668
- WO-A1-2007/114626
- DE-A1-102006 022 598

## Beschreibung

Die Erfindung betrifft eine Keramik aus präkeramischen Papier- und/oder Pappstrukturen, insbesondere ausgebildet zur Verwendung als keramisches Filtermaterial, erhältlich aus einem Verbund von wenigstens zwei äußeren präkeramischen Papier- und/oder Pappstrukturen als Deckschichten und wenigstens einer inneren präkeramischen Papier- und/oder Pappstruktur als Zwischenschicht und Abstandshalter für die äußeren präkeramischen Papier- und/oder Pappstrukturen.

Poröse Keramiken werden in der Technik für zahlreiche Anwendungen eingesetzt, beispielsweise als Wärmeisolationsstrukturen, Brennhilfsmittel, Porenbrennersubstrate sowie Brandschutzstrukturen.

Zur Herstellung dünnwandiger Strukturkeramiken können Papierstrukturen und/oder Pappstrukturen als Formgebungsinstrument eingesetzt werden. Dabei ist aus dem Stand der Technik bereits bekannt, Papier- und/oder Pappstrukturen in einen Schlicker aus metallischen oder keramischen Pulvern zu tauchen, wodurch eine äußere Beschichtung erfolgt. Die entsprechend getauchten Pappen bzw. Papiere werden anschließend über Oxidation bzw. Pyrolyse und Sinterbrand in Keramikformkörper überführt, was nachfolgend als "Keramisierung" bezeichnet wird. Bei dieser Verfahrensführung ergeben sich bereits hochtemperaturbeständige, zellulare Keramiken mit vergleichsweise geringem Gewicht. Durch Laminieren können beispielsweise mehrere Lagen von präkeramischen Papier- und/oder Pappstrukturen zu Platten und durch Verbinden gewellter Lagen mit planaren präkeramischen Papieren oder Pappen tragfähige Wellpappen-Strukturen realisiert werden. Nach der thermischen Behandlung und der Sinterung entstehen daraus reinkeramische Bauteile. Verglichen mit einer massiven Keramik gleicher Dicke, beispielsweise aus Aluminiumoxid, werden so erhebliche Gewichtsersparnisse erreicht.

Aus der WO 2007/042105 A1 ist ein Verfahren zur Herstellung einer Keramik bekannt, wobei Faserstoffe und Füllstoffe gemischt und zu einem präkeramischen Papier bzw. einer Pappe verarbeitet werden. Anschließend wird das so hergestellte Papier bzw. die hergestellte Pappe einer Pyrolyse und/oder einem Sintervorgang ausgesetzt. Die so erhältliche Keramik ist in Form einer zuvor abgebildeten Papier- oder Pappstruktur als Verbundkeramik ausgebildet. Die Füllstoffe können ausgewählt sein aus der Gruppe der Karbide, Nitride, Oxide, Boride und/oder Zeolithe. Als Füllstoffe können Metalle, wie Eisen, Nicht-Eisen-Metalle, wie Kupfer, Nickel, Chrom, Titan, sowie deren Legierungen, wie Bronze, Messing oder Edelstahl, eingesetzt werden. Als Füllstoffe können insbesondere auch Al₂O₃, ZrO₂, SiC, Si₃N₄, TiO₂, B₄C, TiC, TiB₂ und/oder Mischungen derselben und/oder Gläser wie Alumosilikate eingesetzt werden. Im Übrigen ist aus der WO 2007/042105 A1 bereits bekannt, eine Keramik aus präkeramischen Papier- oder Pappstrukturen zur Gastrennung bzw. Flüssigfiltration einzusetzen. Derartige keramische Membranen finden Anwendung in der Micro-, Ultra- und Nanofiltration. Hier werden flache, großflächige Filterkonstruktionen angestrebt, welche mittels konservativer Verfahren, beispielsweise dem Extrudieren, nicht realisierbar sind. Der Vorteil des Einsatzes der in Rede stehenden Keramikstrukturen liegt darin, dass großflächige, dünne keramische Substrate herstellbar sind und durch papiertechnische Verfahren in Mehrschichtsystemen realisiert werden können. Die Dicke der keramischen Substrate liegt hier unter 500 µm bei Papieren, jedoch bis 50 mm bei Pappen.

Weitere Verfahren zur Herstellung von Keramiken aus präkeramischen Papier- und/oder Pappstrukturen sind aus der WO 2007/113219 A1 und aus der WO 2005/049524 A1 bekannt.

Alle Technischen Merkmale der in Bezug genommenen Dokumente WO 2007/042105 A1, WO 2007/113219 A1 und WO 2005/049524 A1 sollen zur Lehre der Erfindung gehören. Die vorgenannten Dokumente sollen vollständig in die Offenbarung der Erfindung einbezogen sein. Insbesondere betrifft dies die bekannten Verfahren zur Herstellung einer Keramik sowie die Ausgangsstoffe zur Herstellung der Keramik.

Von Nachteil bei Keramiken, die durch thermische Umsetzung eines Verbundes von mehreren präkeramischen Papier- und/oder Pappstrukturen erhältlich sind und beispielsweise eine Wellpappen- oder eine ähnliche Leichtbaustruktur aufweisen können, ist jedoch, dass die Verbindung zwischen den einzelnen keramisierten Schichten aus den präkeramischen Papier- und/oder Pappstrukturen keinen dauerhaften Zusammenhalt gewährleistet und die Keramik eine nicht ausreichende mechanische Festigkeit aufweist. Werden beispielsweise aus präkeramischen Papier- und/oder Pappstrukturen erhaltene Keramiken mit Wellpappen-Struktur zur Filtration von Fluiden eingesetzt, kann es bei einer Filterrückspülung sehr leicht zum Abplatzen von Teilen der Keramik kommen. Die Gefahr von Abplatzungen ist insbesondere erhöht, wenn korrosive Medien gefiltert werden. Auch in anderen Anwendungsbereichen, beispielsweise bei Leichtbauwerken und Leichtbauteilen, in denen Keramiken aus präkeramischen Papier- und/oder Pappstrukturen zum Einsatz kommen, kann es durch eine ungleichmäßige Lastverteilung leicht zum Abplatzen von Teilen der Keramik kommen, was sich nachteilig auf die Lebensdauer der Keramik auswirken und/oder die Funktionsfähigkeit der Keramik beeinträchtigen kann,

Aus der WO 2007/114626 A1 ist ein Keramikfilter bekannt, der eine erste Schicht, die auf der Außenseite des Keramikfilterkörpers gebildet ist und ein Aluminiumsilikat enthält, eine zweite Schicht, die auf der ersten Schicht gebildet ist und Ton- und Keramikfasern enthält, und eine dritte Schicht, die auf der zweiten Schicht gebildet ist und ein Aluminiumphosphat enthält, umfasst. Der Keramikfilter weist eine Wabenstruktur auf, die durch ein wellenförmiges Keramikpapier und ein plattenförmiges Keramikpapier gebildet wird.

Die WO 2006/005668 A1 offenbart ein Verfahren zur Herstellung eines keramischen Filterelementes in einem Abgasfilter für Brennkraftmaschinen, wobei zunächst eine brennbare, nicht keramische Trägerbahn mit einem keramischen Schlicker getränkt und anschließend in der gewünschten geometrischen Form so weit ausgebrannt wird, bis die Trägerbahn verbrannt und ein starrer Filterkörper gebildet ist. Bei der nicht-keramischen Trägerbahn kann sowohl organisches Material als auch anorganisches Material eingesetzt werden. Als besonders vorteilhaft erweist sich eine Trägerbahn aus Papier. Da der keramische Schlicker die Trägerbahn vollständig durchtränkt, bleibt nach dem Ausbrennen des Materials der Trägerbahn ein komplettes Abbild der geometrischen Struktur der Trägerbahn erhalten, bestehend aus dem Keramikmaterial. Damit sind zum einen grundsätzlich lediglich zwei Verfahrensschritte für die Herstellung des keramischen Filterelementes ausreichend, Zudem ist die Verwendung der Trägerbahn vorteilhaft, da die Trägerbahn bereits in die gewünschte geometrische Struktur gebracht werden kann, beispielsweise geriffelt oder gewellt sein kann, um die Strömungsbahnen für das Abgas herzustellen, so dass auf eine zusätzliche Formgebung nach dem Einbringen des keramischen Schlickers verzichtet werden kann. Schließlich ist vorteilhaft, dass der Filterkörper seine geometrische Form nach dem Tränken mit dem keramischen Schlicker beibehält, so dass nach dem Aushärten bzw. dem Brennen die gewünschte geometrische Form des Schlickerkörpers ohne Nachbearbeitung erreicht bzw. beibehalten wird. Die in dieser Weise hergestellten Filterelemente lassen sich insbesondere als Dieselrußfilter und Katalysatorträger einsetzen.

Aufgabe der vorliegenden Erfindung ist es, eine Keramik der eingangs genannten Art zur Verfügung zu stellen, die sich durch eine verbesserte mechanische Festigkeit und durch ein geringes Gewicht auszeichnet.

Die vorgenannte Aufgabe ist dadurch gelöst, dass der zur Herstellung der erfindungsgemäßen Keramik eingesetzte Verbund aus präkeramischen Papieren und/oder Pappen wenigstens eine innere präkeramische Papier- und/oder Pappstruktur aufweist, die oberseitig und/oder unterseitig vollflächig mit wenigstens einer weiteren präkeramischen Papier- und/oder Pappstruktur verbunden ist und eine Mehrzahl von die Struktur quer zu den Flachseiten durchsetzende Flächenausnehmungen bzw. Perforationen bzw. durchgehende Öffnungen aufweist, die Hohl- oder Leerräume in der inneren Papier- und/oder Pappstruktur bilden. Im Bereich der Ausnehmungen ist die innere präkeramische Papier- und/oder Pappstruktur nicht mit der weiteren präkeramischen Papier- und/oder Pappstruktur verbunden. Die äußeren präkeramischen Papierund/oder Pappstrukturen als Deckschichten weisen vorzugsweise geschlossene Flachseiten bzw. Oberflächen auf. Eine innere präkeramische Papierund/oder Pappstruktur kann mit wenigstens einer äußeren präkeramischen Papier- und/oder Pappstruktur und/oder mit wenigstens einer weiteren inneren präkeramischen Papier- und/oder Pappstruktur verbunden sein. Vorzugsweise ist die innere präkeramische Papier- und/oder Pappstruktur auf beiden Flachseiten jeweils mit einer äußeren präkeramischen Papier- und/oder Pappstruktur verbunden. Grundsätzlich ist es möglich, die Papier- und/oder Pappstrukturen des Verbundes durch an sich aus dem Stand der Technik bekannte Papierfügetechniken (kraft- und/oder formschlüssig) miteinander zu verbinden, insbesondere durch Laminieren.

Durch den vollflächigen Verbund zwischen den miteinander verbundenen angrenzenden präkeramischen Papier- und/oder Pappstrukturen wird eine hohe Festigkeit der erfindungsgemäßen Keramik sichergestellt. Die Gefahr von Abplatzungen bzw. Absprengungen von Teilen der Keramik bei der bestimmungsgemäßen Nutzung ist somit deutlich gegenüber den aus dem Stand der Technik bekannten Keramiken verringert. Um eine hohe mechanische Festigkeit der erfindungsgemäßen Keramik sicherzustellen, ist es möglich, den Verbund während der thermischen Behandlung zur Überführung in die Keramik mit einem Gewicht zu belasten. Hierbei ist eine hohe Formhaltigkeit des Verbundes auch bei hohen Temperaturen und der damit verbundenen Materialerweichung aufgrund des erfindungsgemäß vorgesehenen vollflächigen Verbundes zwischen einer inneren präkeramischen Papier- und/oder Pappstruktur und einer äußeren präkeramischen Papier- und/oder Pappstruktur gewährleistet. Insbesondere eignet sich die erfindungsgemäße Keramik zur Verwendung als keramisches Filtermaterial, wobei auch bei Filtration von korrosiven Medien und/oder bei einer Filterrückspülung eine Beschädigung der keramischen Strukturen in einem hohen Maße ausgeschlossen werden kann. Ein weiterer bevorzugter Anwendungsbereich der erfindungsgemäßen Keramik liegt im Bereich der Leichtbauwerkstoffe, wobei Leichtbauteile mit einer erfindungsgemäßen Keramik eine hohe mechanische Festigkeit aufweisen. Durch die erfindungsgemäß vorgesehenen Flächenausnehmungen in der inneren präkeramischen Papier- und/oder Pappstruktur wird gleichzeitig ein geringes Gewicht der erfindungsgemäßen Keramik sichergestellt. Die Größe und/oder Verteilung der Flächenausnehmungen ist dabei derart gewählt, dass die geschlossenen Bereiche der inneren präkeramischen Papier- und/oder Pappstruktur ausreichend groß sind, um bei vollflächiger Verbindung mit einer äußeren präkeramischen Papier- und/oder Pappstruktur eine ausreichend hohe mechanische Festigkeit des Verbundes und damit auch der durch thermische Behandlung aus dem Verbund erhältlichen erfindungsgemäßen Keramik sicherzustellen.

Der Begriff "präkeramische Papier- und/oder Pappstruktur" betrifft jede Papier- und/oder Pappstruktur, die sich thermisch "keramisieren" bzw. umsetzen lässt, um eine Keramikstruktur zu erhalten. Ein Verbund aus Papier- und/oder Pappstrukturen bzw. -lagen kann zur Herstellung einer erfindungsgemäßen Keramik beispielsweise in einen Schlicker aus metallischen oder keramischen Pulvern getaucht und/oder von außen beschichtet werden. Anschließend wird der Verbund wie oben beschrieben über Oxidation bzw. Pyrolyse und Sinterbrand in eine Keramik überführt. Darüber hinaus ist es beispielsweise auch möglich, dass die präkeramischen Papier- und/oder Pappstrukturen aus einer Mischung von Faserstoffen und Füllstoffen erhältlich sind. Darüber hinaus ist es beispielsweise möglich, präkeramische Papier- und/oder Papplagen aus einer Mischung von Faserstoffen und Füllstoffen zu erhalten.

Zur Herstellung der erfindungsgemäßen Keramik können vorzugsweise planare bzw. eben ausgebildete präkeramische Papier- und/oder Pappstrukturen als äußere und/oder innere Schichten des Verbundes miteinander verbunden werden. Der Verbund kann vor der thermischen Behandlung bzw. der Umwandlung in ein Keramikmaterial umgeformt werden, wobei zu diesem Zweck an sich aus dem Stand der Technik bekannte Papier- bzw. Pappformgebungstechniken eingesetzt werden können, um gegebenenfalls dünnwandige, komplex geformte Strukturkeramiken herzustellen. Beispielsweise ist es möglich, dass der Verbund vor der thermischen Behandlung geriffelt oder gewellt wird.

Bei einer bevorzugten Ausführungsform wird die erfindungsgemäße Keramik erhalten durch thermische Umwandlung eines Verbundes, der wenigstens zwei im wesentlichen vollflächig miteinander verbundene innere präkeramische Papier- und/oder Pappstrukturen zwischen zwei äußeren Papier- und/oder Pappstrukturen aufweist. Durch die Dicke und/oder Anzahl der verwendeten inneren präkeramischen Papier- und/oder Pappstrukturen lässt sich der Abstand zwischen den äußeren Deckschichten des Verbundes und damit die Dicke der erfindungsgemäßen Keramik bedarfsweise im Hinblick auf einen bestimmten Anwendungsfall einstellen. Es versteht sich, dass die erfindungsgemäße Keramikstruktur auch erhältlich sein kann aus einem Verbund präkeramischer Papier- und/oder Pappstrukturen, wobei der Verbund gebildet wird aus einer Mehrzahl von Lagenordnungen mit jeweils wenigstens zwei äußeren Deckschichten und wenigstens einer inneren Zwischenschicht als Abstandshalter für die äußeren Deckschichten. Zwei benachbarte Lagenordnungen der vorbeschriebenen Art können dann über wenigstens eine weitere Zwischenschicht voneinander getrennt und miteinander verbunden schicht voneinander getrennt und miteinander verbunden sein.

Bei einer weiter bevorzugten Ausführungsform der Erfindung können Flächenausnehmungen in einer ersten inneren präkeramischen Papier- und/oder Pappstruktur des Verbundes und Flächenausnehmungen in einer angrenzenden zweiten inneren präkeramischen Papier- und/oder Pappstruktur des Verbundes komplementär ausgebildet sein, wobei die Flächenausnehmungen in angrenzenden inneren präkeramischen Papier- und/oder Pappstrukturen bereichsweise übereinanderliegend angeordnet sein können bzw. sich lediglich bereichsweise überlappen. Durch sich lediglich bereichsweise überlappende bzw. überlagernde Flächenausnehmungen der beiden inneren präkeramischen Papier- und/oder Pappstrukturen wird sichergestellt, dass eine ausreichend große Verbindungsfläche zwischen den angrenzenden inneren präkeramischen Papier- und/oder Pappstrukturen zur Verfügung steht, um eine hohe Festigkeit des Verbundes und damit eine hohe Festigkeit der erfindungsgemäßen Keramik zu gewährleisten.

Die Flächenausnehmungen können strömungsleitend miteinander verbunden sein. Grundsätzlich ist es beispielsweise möglich, dass der Verbund lediglich eine innere präkeramische Papier- und/oder Papierstruktur zwischen zwei Deckschichten mit Flächenausnehmungen zwischen zwei Deckschichten aufweist, wobei die Flächenausnehmungen miteinander verbunden sind und in der Keramik wenigstens einen im Wesentlichen in einer Strömungsebene verlaufenden Strömungsleitkanal bilden. Vorzugsweise sind jedoch wenigstens zwei direkt bzw. unmittelbar miteinander verbundene innere präkeramische Papier- und/oder Pappstrukturen vorgesehen, wobei durch die Flächenausnehmungen in einer ersten inneren präkeramischen Papier- und/oder Pappstruktur und durch die Flächenausnehmungen in einer angrenzenden zweiten inneren präkeramischen Papier- und/oder Pappstruktur durch Keramisierung miteinander verbundene Strömungsleitkanäle zwischen den äußeren Deckschichten der Keramik gebildet werden. Die Flächenausnehmungen in der ersten inneren präkeramischen Papier- und/oder Pappstruktur und die Flächenausnehmungen in der angrenzenden zweiten inneren präkeramischen Papier- und/oder Pappstruktur liegen dabei auf unterschiedlichen Höhenstufen. Die aus einem solchen Verbund erhaltene Keramik weist folglich auf unterschiedlichen Strömungsebenen angeordnete und auf die Flächenausnehmungen der inneren präkeramischen Papier- und/oder Pappstrukturen zurückzuführende miteinander verbundene Kammern in einem Bereich zwischen äußeren vorzugsweise geschlossenen Keramikschichten auf, wobei über die Kammern eine Durchströmung der Keramik bei geringem Strömungswiderstand möglich ist. Vorzugsweise bilden die Kammern durchgehende sich über die gesamte Länge und/oder Breite der erfindungsgemäßen Keramik erstreckende Strömungsleitkanäle, wobei, weiter vorzugsweise, eine Fluidabführung in Längsrichtung und in Querrichtung der Keramik und im wesentlichen parallel zu den Flachseiten der Keramik möglich sein kann.

Durch die Größe der Flächenausnehmungen lässt sich der Strömungswiderstand beim Durchströmen der Keramik beeinflussen. Zu berücksichtigen ist in diesem Zusammenhang allerdings, dass mit steigender Größe der Flächenausnehmungen die für eine Verbindung der Papier- und/oder Pappstrukturen miteinander zur Verfügung stehende (Gesamt-)Verbindungsfläche sinkt. Je nach Anforderungen an die mechanische Festigkeit der erfindungsgemäßen Keramik ist somit die Größe der Flächenausnehmungen in den Papier- und/oder Pappstrukturen zu begrenzen. Vorzugsweise beträgt der Anteil der Flächenausnehmungen einer Papier- und/oder Pappstruktur bzw. -lage bezogen auf die Grundfläche der Papier- und/oder Pappstruktur bzw. -lage zwischen 10 bis 90 %, vorzugsweise zwischen 20 % und 80 %. Die vorgenannten Bereiche umfassen alle ganzzahligen Zwischenwerte, auch wenn dies nicht im Einzelnen beschrieben ist.

Die Dicke einer präkeramischen Papier- und/oder Papplage im Grünzustand des Verbundes, d. h. vor dem Sinterprozess, kann wenigstens 80 µm, vorzugsweise zwischen 100 bis 2000 µm, weiter vorzugsweise zwischen 300 bis 600 µm, betragen, wobei, besonders bevorzugt, eine innere präkeramische Papier- und/oder Pappstruktur und eine äußere präkeramische Papier- und/oder Pappstruktur eine gleiche Dicke aufweisen können. Die vorgenannten Dicken sind vorzugsweise bezogen auf eine ebene präkeramische Papier- und/oder Papplage bzw. -struktur im Grünzustand, d. h. vor der Umwandlung in eine Keramik. Durch eine geringe Dicke der Papier- und/oder Pappstrukturen lassen sich leichte Keramiken herstellen, die gleichzeitig eine hohe Festigkeit aufweisen. Vorzugsweise werden zur Herstellung des Verbundes Papier- und/oder Pappstrukturen eingesetzt, die die gleiche Dicke aufweisen. Dies führt zu einem geringen verfahrenstechnischen Aufwand bei der Herstellung der erfindungsgemäßen Keramik.

Die Flächenausnehmungen in einer inneren präkeramischen Papier- und/oder Pappstruktur können regelmäßig verteilt angeordnet sein. Vorzugsweise sind die Flächenausnehmungen kreis-, ellipsen- oder polygonförmig ausgebildet. Auch können als Langlöcher ausgebildete oder waben-, dreieck-, trapez- oder viereckförmige Ausnehmungen vorgesehen sein. Hierbei können die Flächenausnehmungen von wenigstens einer inneren präkeramischen Papier- und/oder Pappstruktur des Verbundes gleich konturiert sein. Grundsätzlich ist es aber auch möglich, dass die Flächenausnehmungen in einer Papier- und/oder Pappstruktur unterschiedlich konturiert sind. Der Einfachheit halber können die Flächenausnehmungen einer ersten inneren präkeramischen Papier- und/oder Pappstruktur und die Flächenausnehmungen einer zweiten inneren präkeramischen Papier- und/oder Pappstruktur des Verbundes auch gleich konturiert ausgebildet sein. Um eine teilweise Überlappung der Flächenausnehmungen zu gewährleisten, können die Flächenausnehmungen in einer ersten inneren präkeramischen Papier- und/oder Pappstruktur des Verbundes beispielsweise um 90° gedreht zu den Flächenausnehmungen in einer angrenzenden zweiten inneren präkeramischen Papier- und Pappstruktur des Verbundes angeordnet sein. Bei mehr als zwei inneren präkeramischen Papier- und/oder Pappstrukturen, die der Verbund aufweist, kann eine entsprechend abwechselnde Ausrichtung der Flächenausnehmungen vorgesehen sein. Vorzugsweise ist vorgesehen, dass Papier- und/oder Papplagen einen Verbund bilden, die gleich konturierte Flächenausnehmungen aufweisen. Die einzelnen Lagen können um 90° zueinander gedreht und/oder versetzt zueinander angeordnet sein, um eine teilweise Überlappung der Flächenausnehmungen von miteinander verbundenen Papier- und/oder Papplagen zu schaffen. Die Flächenausnehmungen in einer Papier- und/oder Papplage sind dabei vorzugsweise durch Stanzen der Papier- und/oder Papplage erhältlich. Der Anteil der Flächenausnehmungen in einer Papier- und/oder Papplage an der Gesamtgrundfläche der Papier- und/oder Papplage kann ca. 20 bis 80 %, vorzugsweise ca. 30 bis 70 %, betragen.

Bei einer alternativen Ausführungsform der Erfindung kann auch vorgesehen sein, dass die einzelnen Flächenausnehmungen und/oder die Gesamtfläche der ausgenommenen Bereiche einer ersten inneren präkeramischen Papier- und/oder Pappstruktur kleiner sind als die Flächenausnehmungen und/oder die Gesamtfläche der ausgenommenen Bereiche einer angrenzenden zweiten inneren präkeramischen Papier- und/oder Pappstruktur. Hierbei kann eine Mehrzahl von Flächenausnehmungen einer ersten inneren präkeramischen Papier- und/oder Pappstruktur mit einer einzelnen Flächenausnehmung oder mehreren Flächenausnehmungen einer zweiten inneren präkeramischen Papier- und/oder Pappstruktur strömungsleitend verbunden sein. Die vorbeschriebene Anordnung und Ausbildung der Flächenausnehmungen von wenigstens zwei angrenzenden inneren präkeramischen Papier- und/oder Pappstrukturen als Zwischenschicht oder Abstandshalter in einem Verbund mit zwei äußeren präkeramischen Papier- und/oder Pappstrukturen als Deckschichten zeichnet sich durch eine ausreichend große Verbindungsfläche zwischen den Papier- und/oder Pappstrukturen und damit durch einen dauerhaften Zusammenhalt bei einem geringen Strömungswiderstand aus.

Die Erfindung betrifft zudem einen Filter mit wenigstens einem Keramikfilterkörper als Filterelement, wobei der Keramikfilterkörper erhältlich ist durch Keramisierung eines mehrlagigen Verbundes von flächigen präkeramischen Papier- und/oder Papplagen.

Aufgabe der vorliegenden Erfindung ist es, einen Filter der eingangs genannten Art zur Verfügung zu stellen, der sich durch eine verbesserte mechanische Festigkeit und durch ein geringes Gewicht auszeichnet und in einfacher Weise bei geringen Kosten herstellbar ist.

Die vorgenannte Aufgabe ist erfindungsgemäß bei einem Filter mit den Oberbegriffsmerkmalen von Anspruch 11 dadurch gelöst, dass der Verbund wenigstens eine Trennlagenanordnung mit wenigstens einer Trennlage aus einem präkeramischen Papier- und/oder Pappmaterial und wenigstens einer mit der Trennlage verbundenen Zwischenlage aus einem präkeramischen Papier- und/oder Pappmaterial als Abstandshalter für die Trennlage aufweist, wobei die Trennlage bei Keramisierung des Verbundes eine Trennschicht und die wenigstens eine Zwischenlage eine Zwischenschicht und Durchströmungszone im Keramikfilterkörper bildet, wobei die Trennlage auf den Flachseiten geschlossen ist und die Zwischenlage eine Mehrzahl von Flächenausnehmungen aufweist und mit der Trennlage oberseitig oder unterseitig vollflächig verbunden ist. Der Verbund kann vorzugsweise wenigstens eine Trennlagenanordnung mit wenigstens zwei Trennlagen aus einem präkeramischen Papier- und/oder Pappmaterial und wenigstens einer zwischen den Trennlagen angeordneten Zwischenlage aus einem präkeramischen Papier- und/oder Pappmaterial als Abstandshalter für die Trennlagen aufweist, wobei die Trennlagen bei Keramisierung des Verbundes Trennschichten und die wenigstens eine Zwischenlage eine Zwischenschicht (Spacerschicht) und Durchströmungszone zwischen zwei Trennschichten im Keramikfilterkörper bilden, wobei die Trennlagen auf den Flachseiten geschlossen sind und die Zwischenlage eine Mehrzahl von Flächenausnehmungen aufweist und in dem Verbund oberseitig und/oder unterseitig mit wenigstens einer angrenzenden präkeramischen Papier- und/oder Papplage vollflächig verbunden ist. Die Struktur der Trennlagenanordnung in dem zuvor beschriebenen Verbund wird bei Keramisierung des Verbundes als doppelte Trennschichtanordnung im Keramikfilterkörper abgebildet, wobei die nebeneinanderliegenden Trennschichten die Filtration eines flüssigen, gasförmigen oder dampfförmigen Mediums ermöglichen.

Grundsätzlich ist es auch möglich, dass zur Herstellung des Filters mit so genannten "verlorenen Kernen" gearbeitet wird. Der Verbund weist dann wenigstens eine Trennlagenanordnung mit wenigstens einer Trennlage aus einem präkeramischen Papier- und/oder Pappmaterial auf. Die Trennlage kann auf einer Außenseite, vorzugsweise auf einer Permeatseite, des durch Keramisierung des Verbundes erhältlichen Keramikfilterkörpers mit einer Zwischenlage aus einem präkeramischen Papier- und/oder Pappmaterial als Abstandshalter verbunden sein. Bei Keramisierung des Verbundes bildet die Zwischenlage auf der Permeatseite eine Zwischenschicht und Durchströmungszone für den Permeatstrom aus. Auf der anderen Außenseite, vorzugsweise der Feedseite, kann die Trennlage in dem Verbund mit einem nicht keramisierbaren Papier- und/oder Pappmaterial und/oder einem nicht-keramisierbaren Zellstoffgewebe oder -material verbunden sein, das bei Keramisierung des Verbundes verbrennt, so dass beispielsweise zwischen zwei benachbarten Trennlagen ein Hohlraum gebildet wird, der bei Durchströmung einen nur geringen Strömungswiderstand verursacht. Auf der Permeat- bzw. Filtratseite kann dagegen eine Zwischenschicht mit Lochstruktur oder dergleichen durch Keramisierung der Zwischenlage aus dem präkeramischen Papier- und/oder Pappmaterial gebildet werden.

Durch einen mit Bezug auf die Flachseiten vollflächigen Verbund zwischen angrenzenden präkeramischen Papier- und/oder Papplagen wird bei dem erfindungsgemäßen Filter eine hohe Festigkeit des Keramikformkörpers sichergestellt. Die Gefahr von Abplatzungen bzw. Absprengungen von Teilen der Keramik ist bei einer bestimmungsgemäßen Nutzung somit deutlich gegenüber den aus dem Stand der Technik bekannten Keramikfiltern mit beispielsweise Wellpappenstruktur verringert. Auch bei Filtration von korrosiven Medien und/oder bei einer Filterrückspülung kann eine Beschädigung des Keramikformkörpers weitgehend ausgeschlossen werden.

Vorzugsweise ist eine Zwischenlage im Verbund auf beiden Flachseiten jeweils vollflächig mit einer weiteren präkeramischen Papier- und/oder Papplage verbunden, was beispielsweise durch Laminieren erfolgen kann. Grundsätzlich ist es dabei möglich, die Papier- und/oder Papplagen des Verbundes vor dem Sinterprozess durch an sich aus dem Stand der Technik bekannte Papierfügetechniken (kraft- und/oder formschlüssig) miteinander zu verbinden.

Durch die Flächenausnehmungen bzw. Perforationen in der bzw. den Zwischenlage(n) können miteinander verbundene Leer- und Hohlräume geschaffen sein, die Kanäle zwischen angrenzenden präkeramischen Papier- und/oder Papplagen bilden und bei der Keramisierung als Durchströmungszonen bzw. Fluidkanäle in einer Zwischenschicht zwischen angrenzenden (Trenn-)Schichten erhalten bleiben und eine gerichtete Durchströmung des Keramikfilterkörpers vorzugsweise in Richtung der Flachseiten der Zwischenschicht ermöglichen. Über Durchströmungszonen in wenigstens einer Zwischenschicht ist feedseitig der Transport eines zu filtrierenden Mediums zu einer oder mehreren Trennschichten oder permeatseitig der Abtransport eines Permeatstroms von der bzw. den Trennschichten bei geringem Strömungswiderstand möglich. Feedseitig können auch Durchströmungszonen durch verlorene Kerne des Verbundes geschaffen werden, wie oben beschrieben. Durch die erfindungsgemäß vorgesehenen Flächenausnehmungen der Zwischenlage wird gleichzeitig ein geringes Gewicht des Keramikfilterkörpers erreicht. Die Flächenausnehmungen werden vorzugsweise durch Schneidplotten oder durch Stanzen von ebenen Papier- und/oder Papplagen vor deren Verbindung erhalten.

Um eine hohe mechanische Festigkeit des Keramikformkörpers sicherzustellen, ist es möglich, den Verbund während der thermischen Behandlung zur Überführung in eine Keramik mit einem Gewicht zu belasten. Aufgrund des erfindungsgemäß vorgesehenen vollflächigen Verbundes zwischen den präkeramischen Papier- und/oder Papplagen ist eine hohe Formhaltigkeit des Verbundes auch bei hohen Temperaturen und der damit verbundenen Materialerweichung gewährleistet.

Der Begriff "präkeramisches Papier- und/oder Pappmaterial" betrifft jede Papier- und/oder Pappstruktur, die wie oben beschrieben in eine Keramikstruktur umgewandelt werden kann.

Ein Papier- und/oder Pappmaterial kann insbesondere nach einer entsprechenden Formgebung mit einem keramisierbaren Material beschichtet werden, um zunächst eine Glättungs- bzw. Ausgleichsschicht auf das Papier- und/oder Pappmaterial aufzubringen. Anschließend erfolgt ein erster Sintervorgang bei dem das Papier- und/oder Pappmaterial verbrennt und ein keramischer Stützkörper entsteht, der anschließend erneut mit einem keramisierbaren Material beschichtet wird. Es schließt sich dann ein nochmaliger Sintervorgang an. Durch mehrfaches Beschichten und Sintern lassen sich auf diesem Weg sehr kleine Porendurchmesser einer Trennschicht gezielt einstellen bzw. vorgeben. Um eine geringe Porengröße einer Trennschicht zu erreichen, kann auch eine mehrfache Beschichtung und Sinterung einer Trennlage bzw. eines daraus erhältlichen Stützkörpers lediglich auf einer Feedseite vorgesehen sein.

Vorzugsweise können planare bzw. eben ausgebildete präkeramische Papier- und/oder Papplagen miteinander verbunden werden und äußere Schichten (Trennlagen) und/oder innere Schichten (Zwischenlagen) des Verbundes bilden. Der Verbund kann dann vor der thermischen Behandlung bzw. vor der Keramisierung durch Sinterung umgeformt werden, wobei zu diesem Zweck an sich aus dem Stand der Technik bekannte Papier- bzw. Pappformgebungstechniken eingesetzt werden können, um beispielsweise dünnwandige, komplex geformte Strukturkeramiken herzustellen. Insbesondere ist es möglich, dass die Lagen vor der thermischen Behandlung spiralförmig gewickelt und der Verbund im gewickelten Spiralzustand der Lagen keramisiert wird.

Über die Größe der Flächenausnehmungen bzw. Öffnungen in einer Zwischenlage lässt sich der Strömungswiderstand beim Durchströmen einer Zwischenschicht des Keramikfilterkörpers beeinflussen. Zu berücksichtigen ist in diesem Zusammenhang allerdings, dass mit steigender Größe der Flächenausnehmungen die verbleibende Oberfläche abnimmt, die für eine vollflächige Verbindung angrenzender Papier- und/oder Papplagen zur Verfügung steht. Je nach Anforderungen an die mechanische Festigkeit des Keramikfilterkörpers ist somit die Größe der Flächenausnehmungen festzulegen.

Die Dicke einer beispielsweise ebenen präkeramischen Papier- und/oder Papplage im Grünzustand des Verbundes, d. h. vor dem Sinterprozess, kann wenigstens 80 µm, vorzugsweise 300 bis 400 µm, betragen. Die maximale Papierstärke bzw. Dicke einer (ebenen) Papier- und/oder Papplage im Grünzustand kann vorzugsweise zwischen 1,0 mm bis 1,5 mm betragen. Aus dem Stand der Technik sind allerdings auch Papiermaschinen bekannt, die zwei oder mehr Lagen zunächst separat herstellen und dann innerhalb der Maschine zusammenfügen (gautschen), so dass eine aus mehreren Lagen zusammengesetzte Bahn gebildet wird mit einer entsprechenden Dicke, die einem Vielfachen der Dicke einer Lage des Papier- und/oder Pappmaterials im Grünzustand entsprechen kann. Die Schwindung beim Sinterprozess kann grundsätzlich zwischen 20 bis 30 % betragen. Je nach eingesetztem Material kann die Schwindung beim Sinterprozess auch zwischen 10 bis 40 % betragen.

Zur Herstellung des Verbundes können Papier- und/oder Papplagen eingesetzt werden, die eine gleiche Dicke aufweisen. Dies trägt zu einem geringen Herstellungsaufwand des erfindungsgemäßen Filters bei. Vorzugsweise weisen die präkeramischen Papier- und/oder Pappmaterialien, die eine Trennlage bilden, und die präkeramischen Papier- und/oder Pappmaterialien, die eine Zwischenlage bilden, jedoch eine unterschiedliche Dicke auf. Die Trennlage sollte so dünn wie möglich sein, um einen geringen Strömungswiderstand beim Durchtritt durch die Trennschicht zu gewährleisten. Die Zwischenlage kann entsprechend dicker ausgebildet sein, um eine ausreichend große Durchströmungszone mit geringem Strömungswiderstand zu schaffen. Dies gilt insbesondere für eine Zwischenschicht und Durchströmungszone auf der Feedseite der Trennschicht.

Die Flächenausnehmungen in einer Zwischenlage können regelmäßig über die Grundfläche verteilt angeordnet sein. Vorzugsweise sind die Flächenausnehmungen kreis-, ellipsen- oder polygonförmig ausgebildet. Auch können als Langlöcher ausgebildete oder waben-, dreieck-, trapez- oder viereckförmige Ausnehmungen vorgesehen sein. Vorzugsweise sind alle Flächenausnehmungen in einer Zwischenlage gleich konturiert. Der Anteil der Flächenausnehmungen in einer Zwischenlage an der Gesamtgrundfläche der Zwischenlage kann ca. 20 bis 80 %, vorzugsweise ca. 30 bis 70 %, betragen.

Bei einer bevorzugten Ausführungsform der Erfindung ist vorgesehen, dass der zur Herstellung des Keramikfilterkörpers eingesetzte Verbund eine Mehrzahl von nebeneinander liegenden Trennlagenanordnungen - jeweils gebildet durch wenigstens zwei Trennlagen und wenigstens eine Zwischenlage zwischen den beiden Trennlagen - aufweist, die über wenigstens eine zwischen den Trennlagenanordnungen angeordnete weitere Zwischenlage aus einem präkeramischen Papier- und/oder Pappmaterial als Abstandshalter für die Trennlagenanordnungen verbunden sind. Wie bereits oben beschrieben, kann auch vorgesehen sein, dass eine Trennlagenanordnung gebildet wird durch zwei Trennlagen und wenigstens eine Zwischenlage zwischen den beiden Trennlagen, wobei zwei benachbarte Trennlagenanordnungen verbunden sind durch ein nicht-keramisierbares Papier- und/oder Pappmaterial, d. h. ein Material, das beim Sinterprozess verbrennt. Zwei Trennlagenanordnungen können somit durch einen verlorenen Kern miteinander verbunden sein. Zwischen zwei Trennlagenanordnungen entsteht dann beim Sinterprozess ein Hohlraum im Keramikfilterkörper, der vorzugsweise für eine Feedzuleitung vorgesehen sein kann.

Eine Zwischenlage aus einem präkeramischen Papier- und/oder Pappmaterial kann eine Mehrzahl von Flächenausnehmungen aufweisen und oberseitig und/oder unterseitig vollflächig mit einer angrenzenden präkeramischen Papier- und/oder Papplage verbunden sein. Diese Zwischenlage bildet dann bei Keramisierung des Verbundes eine Zwischenschicht des Keramikfilterkörpers, beispielsweise eine Drainageschicht zum Ableiten von Permeat von benachbarten Trennschichten.

Über erste Zwischenschichten kann ein zu filtrierendes Medium einer benachbarten Trennschicht zugeführt und über eine zweite Zwischenschicht ein durch die Trennschicht hindurchtretender Permeatstrom abgeführt werden. In diesem Zusammenhang ist es möglich und vorzugsweise vorgesehen, dass erste und zweite Zwischenschichten bei der Filtration in unterschiedlichen, vorzugsweise um 90° gedreht zueinander angeordneten, Strömungsrichtungen durchströmt werden, so dass eine Kreuzstromfiltration möglich ist.

Eine bestimmte Strömungsrichtung in einer Zwischenschicht lässt sich durch die Struktur der präkeramischen Zwischenlagen vorgeben, die bei der Keramisierung des Verbundes eine Zwischenschicht bilden. Der Begriff "Struktur" einer präkeramischen Papier- und/oder Papplage kann im Sinne der Erfindung bezogen sein auf eine bestimmte Anzahl, Geometrie, Größe und Verteilung sowie Ausrichtung der Flächenausnehmungen in einer Papier- und/oder Papplage.

Zwischen wenigstens zwei Trennlagen des Verbundes sind vorzugsweise wenigstens zwei flächig miteinander verbundene Zwischenlagen vorgesehen, so dass eine wenigstens vierlagige Trennlagenanordnung mit äußeren Trennlagen und inneren Zwischenlagen erhalten wird. Vorzugsweise weisen die unmittelbar bzw. direkt miteinander verbundenen Zwischenlagen komplementär zueinander ausgebildete und lediglich bereichsweise überlappende Flächenausnehmungen bzw. Öffnungen auf. Dadurch lässt sich zum einen eine hohe Festigkeit des Keramikfilterkörpers erreichen. Durch eine größere Anzahl von Zwischenlagen im Verbund und/oder durch Verwendung von Zwischenlagen mit größerer Dicke lässt sich bedarfsweise die Festigkeit des Keramikfilterkörpers weiter steigern. Durch die überlappenden Flächenausnehmungen miteinander verbundener Zwischenlagen werden miteinander verbundene Hohlräume bzw. Leerstellen und Kanäle zwischen den Trennlagen gebildet, die bei der Keramisierung des Verbundes erhalten bleiben und in dem Keramikfilterkörper einen Fluidtransport innerhalb der aus den Zwischenlagen gebildeten Zwischenschichten des Filters vorzugsweise in Richtung der Flachseiten der Zwischenschichten ermöglichen. Je nach Anzahl, Geometrie, Größe und Verteilung sowie Ausrichtung der überlappenden Flächenausnehmungen lassen sich Größe und Anzahl der Fluidkanäle in den Zwischenschichten verändern und damit der Strömungswiderstand beeinflussen sowie eine bestimmte Strömungsrichtung erzwingen.

Um sicherzustellen, dass sich die Flächenausnehmungen von miteinander verbundenen identischen Zwischenlagen lediglich bereichsweise überlappen, können benachbarte Zwischenlagen beispielsweise um 90° gedreht zueinander ausgerichtet sein. Vorzugsweise ist jedoch vorgesehen, dass miteinander verbundene Zwischenlagen unterschiedlich strukturiert sind. Beispielsweise kann vorgesehen sein, dass die Flächenausnehmungen einer ersten Zwischenlage kleiner sind und/oder eine andere Geometrie aufweisen als die Flächenausnehmungen einer angrenzenden zweiten Zwischenlage. Verbundene Zwischenlagen können dabei eine gleiche oder eine unterschiedliche Dicke aufweisen.

Vorzugsweise weist der Keramikfilterkörper einen im Bereich der Mittellängsachse verlaufenden Sammelkanal für Permeat oder für ein zu filtrierendes Medium auf, wobei Trennschichten und Zwischenschichten über den Umfang des Sammelkanals verteilt angeordnet, vorzugsweise spiralförmig um den Sammelkanal angeordnet, sein können. Um die Permeatableitung von den Trennschichten oder die Mediumzufuhr zu den Trennschichten zu ermöglichen, ist der Sammelkanal strömungsleitend mit wenigstens einer Zwischenschicht verbunden. Vorzugsweise weist der Keramikfilterkörper abwechselnd erste und zweite Zwischenschichten auf, wobei die ersten Zwischenschichten mit dem Sammelkanal strömungsleitend verbunden sind und die zweiten Zwischenschichten mit dem Sammelkanal nicht in fluidischer Verbindung stehen. Dadurch lässt sich die Trennaufgabe des Filters sicherstellen und eine Vermischung von Permeat und zu filtrierendem Fluid bzw. Retentat ausschließen.

Der Verbund kann einen Rohrkörper aus einem präkeramischen Papier- und/oder Pappmaterial aufweisen, wobei die Trennlagen und die Zwischenlagen über den Umfang des Rohrkörpers verteilt angeordnet und an dem Rohrkörper befestigt sind. Bei der Keramisierung des Verbundes bildet der Rohrkörper einen rohrförmigen Bereich im Keramikfilterkörper aus, der einen Sammelkanal für einen Permeatstrom oder ein zu filtrierendes Fluid bzw. einen Retentatstrom begrenzt. Um Permeat von den Trennschichten über den Sammelkanal ableiten zu können oder ein Fluid den Trennschichten zuführen zu können, ist es erforderlich, dass wenigstens eine Zwischenschicht mit dem Sammelkanal strömungsleitend verbunden ist. Hierzu kann vorgesehen sein, dass durch Flächenausnehmungen bzw. Öffnungen in verbundenen Zwischenlagen gebildete Hohlräume, Leerstellen und Kanäle über Öffnungen im Rohrkörper mit dem Inneren des Rohrkörpers verbunden sind.

Sofern der Rohrkörper und die mit dem Rohrkörper verbundenen Trenn- und Zwischenlagen aus einem gleichen präkeramischen Papier- und/oder Pappmaterial bestehen, weist der Verbund in allen Bereichen ein vergleichbares Schwindungsverhalten bei Wärmebehandlung und Keramisierung auf. Die beim Schwindungsprozess auftretenden Spannungen sind daher gering, was zu einer hohen Festigkeit des Keramikfilterkörpers beiträgt.

Bei einer alternativen Ausführungsform der Erfindung kann vorgesehen sein, dass der Verbund einen rohrförmigen Grünkörper aufweist, wobei die Trennlagen und die Zwischenlagen über den Umfang des Grünkörpers verteilt angeordnet und an dem Grünkörper befestigt sind. Hierzu kann vorgesehen sein, dass durch Flächenausnehmungen bzw. Öffnungen in verbundenen Zwischenlagen gebildete Hohlräume, Leerstellen und Kanäle über Öffnungen im Grünkörper mit dem Inneren des Grünköpers verbunden sind. Der Grünkörper und die Trenn- sowie Zwischenlagen werden gemeinsam gesintert. Aufgrund des unterschiedlichen Schwindungsverhaltens kommt hierbei der Befestigung der Papier- und/oder Papplagen an dem Grünkörper eine besondere Bedeutung zu.

Schließlich ist es auch möglich, dass die Trennlagen und die Zwischenlagen in dem Verbund um einen zylindrischen Hohlraum herum spiralförmig angeordnet sind. Die präkeramischen Papier- und/oder Papplagen können beispielsweise vor der Keramisierung um einen Stab oder dergleichen gewickelt werden, so dass sich nach dem Herausziehen des Stabes ein mittlerer zylindrischer Hohlraum ergibt, der nach Keramisierung des Verbundes den Sammelkanal bildet. Zur Abdichtung können an den Enden des Sammelkanals Stöpsel oder dergleichen vorgesehen und in den Sammelkanal eingesteckt und eingedichtet sein. Auch hier kann vorgesehen sein, dass in dem Verbund durch Flächenausnehmungen bzw. Öffnungen von verbundenen Zwischenlagen gebildete Hohlräume, Leerstellen und Kanäle mit dem Inneren des Hohlraums verbunden sind, um im Keramikfilterkörper einen Flüssigkeitstransport über die Zwischenschichten und den Sammelkanal zu ermöglichen.

Aus der EP 1 464 379 A1 und der DE 397 31 430 T2 sind spiralförmig gewickelte Membranfilter (Spiralwickelmodule) bekannt, die hüllenartige Doppelfiltermembranen aufweisen, die in einem Quadrat oder einem Rechteck ausgebildet sind und einen inneren Zwischenraum, wie beispielsweise einen Maschenzwischenraum, zum Ausbilden eines Kanals im Inneren der Membran aufweisen. Die Membranen sind um einen Schaft gewickelt und an dem Schaft befestigt. Die Herstellung der bekannten spiralförmig gewickelten Membranfilter ist aufwendig und kostenintensiv.

Zur Lösung der eingangs genannten Aufgabe wird daher ein Filter mit einem Keramikfilterkörper als Filterelement vorgeschlagen, wobei der Keramikfilterkörper erhältlich ist durch Keramisierung eines Verbundes von mehreren spiralförmig gewickelten flächigen präkeramischen Papier- und/oder Papplagen. Vorzugsweise ist der Keramikfilterkörper erhältlich durch Keramisierung eines Verbundes der oben beschriebenen Art und/oder weist Merkmale des oben beschriebenen Keramikfilterkörpers auf. Erfindungsgemäß werden erstmals Papier- und/oder Pappstrukturen als Formgebungsinstrument zur Ausbildung von Keramikfilterkörpern mit spiralförmig angeordneten Trenn- und Zwischenschichten eingesetzt, was eine einfache und kostengünstige Herstellung des erfindungsgemäßen Filters zulässt.

Die vorgenannten Aspekte und Merkmale der vorliegenden Erfindung sowie die nachfolgend anhand der Zeichnung beschriebenen Aspekte und Merkmale der vorliegenden Erfindung können unabhängig voneinander, in einer beliebigen Kombination, aber auch jeweils im Zusammenhang mit den Oberbegriffsmerkmalen der unabhängigen Ansprüche der vorliegenden Erfindung realisiert werden, auch wenn dies nicht im Einzelnen beschrieben ist. Hier kann jedem beschriebenen Merkmal oder Aspekt eigenerfinderische Bedeutung zukommen. Insbesondere lässt es die Erfindung zu, Merkmale der erfindungsgemäßen Keramik gemäß Anspruch 1 und gegebenenfalls allen oder einzelnen darauf rückbezogenen Unteransprüchen bei einem erfindungsgemäßen Filter nach Anspruch 11 und allen oder einzelnen folgenden Unteransprüchen vorzusehen, auch wenn dies nicht im Einzelnen beschrieben ist.

Weitere Vorteile, Merkmale, Eigenschaften und Aspekte der vorliegenden Erfindung ergeben sich aus der folgenden Beschreibung einer bevorzugten Ausführungsform anhand der Zeichnung. Es zeigen
- Fig. 1: eine schematische Darstellung von zwei äußeren präkeramischen Papier- und/oder Pappstrukturen und zwei inneren präkeramischen Papier- und/oder Pappstrukturen, die zu einem Verbund zusammengefügt zur Herstellung einer erfindungsgemäßen Keramik aus präkeramischen Papier- und/oder Pappstrukturen vorgesehen sind, wobei die inneren präkeramischen Papier- und/oder Pappstrukturen Flächenausnehmungen bzw. durchgehende Öffnungen aufweisen,
- Fig. 2 bis 9: alternative Möglichkeiten zur Anordnung und Ausbildung bzw. Ausgestaltung von Flächenausnehmungen in den inneren präkeramischen Papier- und/oder Pappstrukturen aus Fig. 1,
- Fig. 10: eine schematische Darstellung eines Verbundes mit mehreren präkeramischen Papier- und/oder Papplagen zur Herstellung eines Keramikfilterkörpers durch Keramisierung des Verbundes,
- Fig. 11: eine schematische Darstellung eines erfindungsgemäßen Filters mit einem Keramikfilterkörper, wobei der Keramikfilterkörper erhältlich ist durch Keramisierung eines Verbundes von mehreren spiralförmig aufgewickelten flächigen präkeramischen Papier- und/oder Papplagen, in einer perspektivischen Ansicht schräg von der Seite,
- Fig. 12: eine schematische Draufsicht auf einen Verbund mit einem mittleren Rohrkörper und mehreren über den Umfang des Rohrkörpers verteilt angeordneten Trenn- und Zwischenlagen und die Wickelart der Trenn- und Zwischenlagen,
- Fig. 13: eine schematische Draufsicht auf mehrere Trennlagen und Zwischenlagen eines Verbundes von präkeramischen Papier- und/oder Papplagen, wobei die Trennlagen und die Zwischenlagen einen zylindrischen Hohlraum begrenzen, und die Wickelart der Trenn- und Zwischenlagen,
- Fig. 14: eine schematische Darstellung eines Verbundes mit zwei äußeren Trennlagen aus einem präkeramischen Papier- und/oder Pappmaterial und zwei zwischen den Trennlagen angeordneten Zwischenlagen aus einem präkeramischen Papier- und/oder Pappmaterial als Abstandshalter für die Trennlagen, wobei die inneren Zwischenlagen teilweise überlappende Flächenausnehmungen aufweisen, und
- Fig. 15 bis 22: alternative Möglichkeiten zur Anordnung und Ausbildung bzw. Ausgestaltung von Flächenausnehmungen in den Zwischenlagen aus Fig. 14.

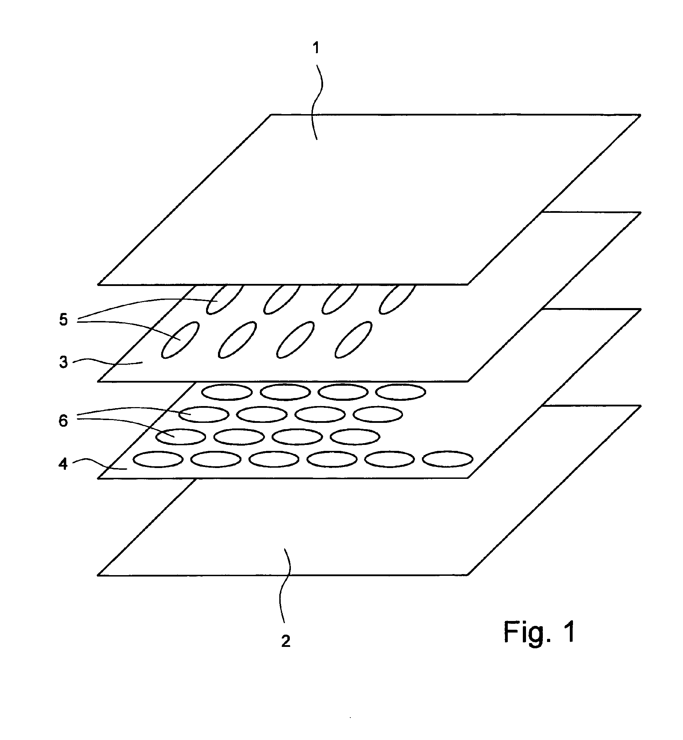

Fig. 1 zeigt eine Anordnung mit zwei äußeren präkeramischen Papier- und/oder Pappstrukturen 1, 2 und mit zwei inneren präkeramischen Papier- und/oder Pappstrukturen 3, 4, wobei die präkeramischen Papier- und/oder Pappstrukturen 1 - 4 insbesondere durch Laminieren und/oder Verkleben zu einem Verbund zusammenzufügen sind. In dem Verbund bilden die beiden äußeren präkeramischen Papier- und/oder Pappstrukturen 1, 2 äußere Deckschichten und die beiden inneren präkeramischen Papier- und/oder Pappstrukturen 3, 4 eine Zwischenschicht bzw. einen Abstandshalter für die äußeren präkeramischen Papier- und/oder Pappstrukturen 1, 2. Aus dem durch Zusammenfügen der präkeramischen Papier- und/oder Pappstrukturen 1 - 4 erhältlichen Verbund lässt sich durch thermische Umsetzung der Papier- und/oder Pappstrukturen eine Keramik in an sich aus dem Stand der Technik bekannter Weise herstellen.

Gemäß Fig. 1 sind die Papier- und/oder Pappstrukturen 1 - 4 eben bzw. planar ausgebildet, was das formflächige Verbinden der Papier- und/oder Pappstrukturen 1 - 4 miteinander erleichtert und eine hohe Festigkeit des Verbundes und damit der daraus erhältlichen Keramik gewährleistet. Es ist möglich, dass der Verbund nach dem Verbinden der Papier- und/oder Pappstrukturen 1 - 4 als solcher einem Formgebungsverfahren unterzogen wird, um eine bestimmte in der Verbundstruktur abgebildete Form der Keramik zu erhalten.

Wie sich weiter aus Fig. 1 ergibt, weisen die inneren präkeramischen Papier- und/oder Pappstrukturen 3, 4 eine Mehrzahl von Flächenausnehmungen 5, 6 auf, die gemäß Fig. 1 regelmäßig angeordnet sind und eine gleiche Größe und Form aufweisen können. Durch die Flächenausnehmungen 5, 6 wird zum einen ein geringes Gewicht des aus den Papier- und/oder Pappstrukturen 1 - 4 erhältlichen Verbundes und damit der erhältlichen Keramik erreicht. Die Flächenausnehmungen 5 der inneren präkeramischen Papier- und/oder Pappstruktur 3 und die Flächenausnehmungen 6 der inneren präkeramischen Papier- und/oder Pappstruktur 4 sind um 90° gedreht zueinander ausgerichtet bzw. orientiert. Beim Verbinden der präkeramischen Papier- und/oder Pappstrukturen 1 - 4 werden die nicht ausgenommenen (vollflächigen) Bereiche der inneren präkeramischen Papier- und/oder Pappstrukturen 3, 4 miteinander und mit den äußeren präkeramischen Papier- und/oder Pappstrukturen 1, 2 verklebt, so dass eine hohe Festigkeit des Verbundes und damit der aus dem Verbund erhältlichen Keramik erreicht wird. Die Anzahl der inneren präkeramischen Papier- und/oder Pappstrukturen 3, 4 kann beliebig gewählt sein, um einen bestimmten Abstand zwischen den äußeren präkeramischen Papier- und/oder Pappstrukturen 1, 2 und damit eine bestimmte Dicke des Verbundes zu erreichen. Mehrere Anordnungen von miteinander verbundenen Papier- und/oder Papplagen der in Fig. 1 gezeigten Art können auch miteinander verbunden werden, vorzugsweise über wenigstens eine weitere innere präkeramische Papier- und/oder Pappstruktur 3, 4. Im Übrigen kann eine Anordnung der in Rede stehenden Art auch mehrere äußere präkeramische Papier- und/oder Pappstrukturen 1, 2 aufweisen, die unmittelbar miteinander verbunden sind.

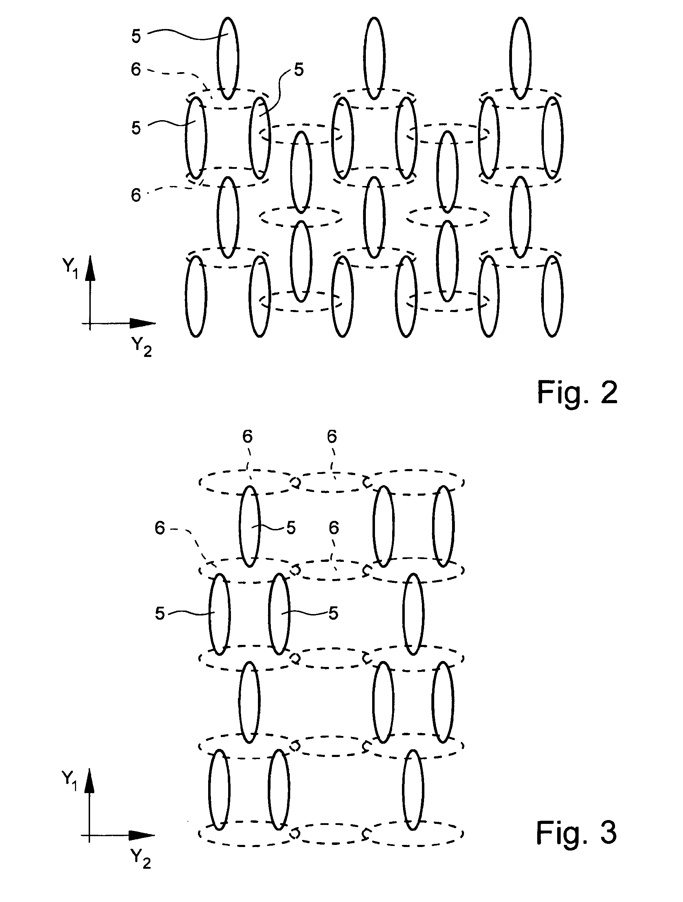

Wie sich aus den Fig. 2 bis 8 ergibt, können Flächenausnehmungen 5 in einer ersten inneren präkeramischen Papier- und/oder Pappstruktur 3 und Flächenausnehmungen 6 in einer benachbarten zweiten inneren präkeramischen Papier- und/oder Pappstruktur 4 komplementär ausgebildet und in dem Verbund der präkeramischen Papier- und/oder Pappstrukturen 1 - 4 aus Fig. 1 bereichsweise übereinanderliegend angeordnet sein. Durch die überlappenden Flächenausnehmungen 5, 6 werden in der aus dem Verbund erhältlichen Keramik miteinander verbundene Strömungsleitkanäle gebildet. Vorzugsweise ist es dabei so, dass eine gerichtete Durchströmung der Keramik in wenigstens zwei Raumrichtungen Y₁, Y₂ möglich ist. Die Flächenausnehmungen 5 einer ersten inneren präkeramischen Papier- und/oder Pappstruktur 3 erstrecken sich gemäß Fig. 2 und Fig. 3 in Strömungsrichtung Y₁, während sich die Flächenausnehmungen 6 einer angrenzenden zweiten inneren präkeramischen Papier- und/oder Pappstruktur 4 quer dazu in Strömungsrichtung Y₂ erstrecken. Die Flächenausnehmungen 5 werden dabei über die quer dazu verlaufenden Flächenausnehmungen 6 miteinander verbunden und umgekehrt.

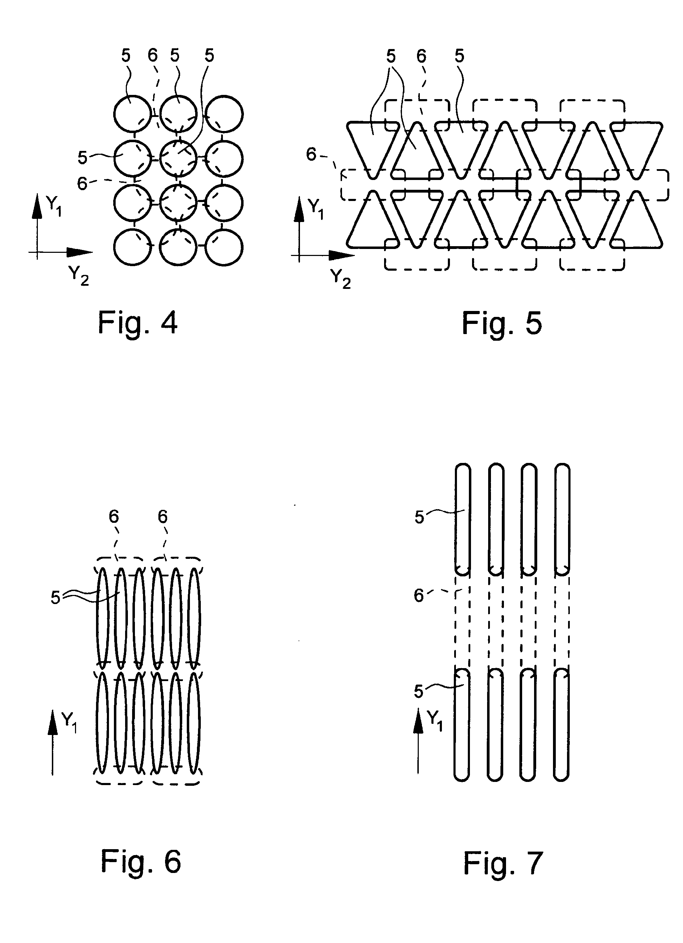

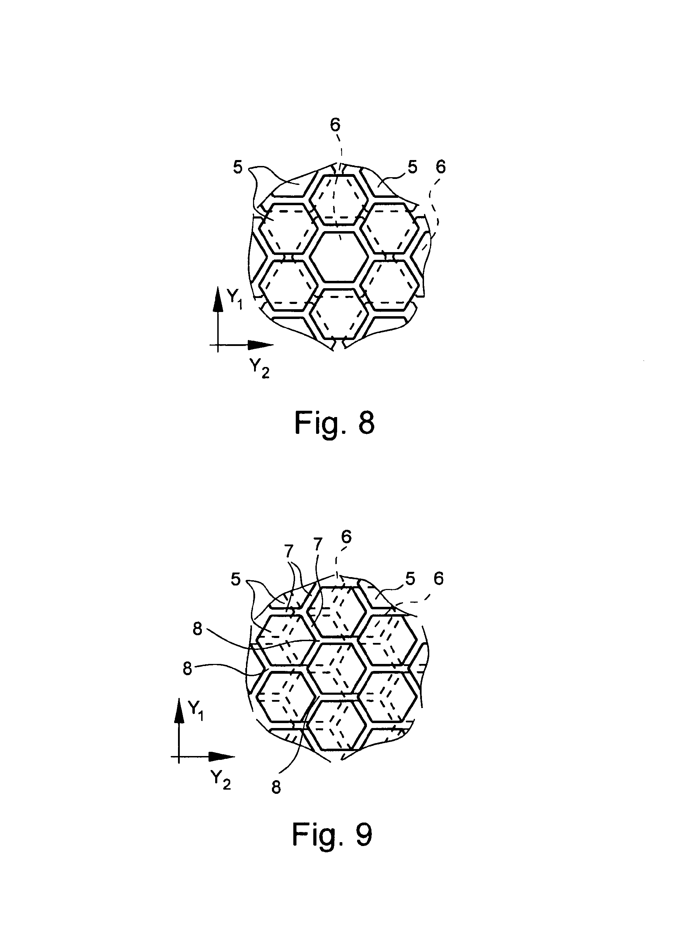

Wie sich weiter aus den Fig. 2 bis 8 ergibt, können die Flächenausnehmungen 5, 6 einer inneren präkeramischen Papier- und/oder Pappstruktur 3, 4 regelmäßig verteilt angeordnet sein. Gemäß den Fig. 2, 3 und 6 sind die Flächenausnehmungen 5, 6 langgestreckt und ellipsenförmig ausgebildet. Gemäß Fig. 7 sind die Flächenausnehmungen 5, 6 als Langlöcher ausgebildet. Gemäß Fig. 4 können die Ausnehmungen 5, 6 auch kreisförmig sein. Gemäß den Fig. 5 und 8 können die Ausnehmungen 5, 6 auch rechteckförmig, dreieckförmig oder sechseck- bzw. wabenförmig ausgebildet sein. Es versteht sich, dass die Flächenausnehmungen 5, 6 grundsätzlich auch eine andere polygonale Form aufweisen können.

Die in Fig. 5 dargestellte Ausführungsform mit abwechselnd angeordneten dreieckförmigen Flächenausnehmungen 5 einer ersten inneren präkeramischen Papier- und/oder Pappstruktur 3 und rechteckförmigen Flächenausnehmungen 6 einer zweiten inneren präkeramischen Papier- und/oder Pappstruktur 4 sowie die in Fig. 8 gezeigte Ausführungsform mit wabenförmigen Flächenausnehmungen 5, 6 zeichnen sich bei entsprechend größeren Durchströmungsöffnungen durch eine vergleichsweise geringe Gesamtverbindungsfläche zwischen den präkeramischen Papier- und/oder Pappstrukturen 1 - 4 aus.

Darüber hinaus sind alle Flächenausnehmungen 5, 6 einer inneren präkeramischen Papier- und/oder Pappstruktur 3, 4 vorzugsweise gleich konturiert. Bei den in den Fig. 2 und 3 dargestellten Ausführungsformen sind die Flächenausnehmungen 5 einer ersten inneren präkeramischen Papier- und/oder Pappstruktur 3 und die Flächenausnehmungen 6 einer zweiten inneren präkeramischen Papier- und/oder Pappstruktur 4 gleich konturiert. Gleiches gilt für die in Fig. 7 dargestellte Ausführungsform.

Wie sich aus den Fig. 4, 5, 6 und 8 ergibt, können die Flächenausnehmungen 5, 6 der miteinander verbundenen präkeramischen Papier- und/oder Pappstrukturen 3, 4 auch unterschiedlich konturiert sein, insbesondere eine unterschiedliche Größe aufweisen. Beispielsweise ist bei den in den Fig. 4 und 8 dargestellten Ausführungsformen vorgesehen, dass die Flächenausnehmungen 5 einer ersten inneren präkeramischen Papier- und/oder Pappstruktur 3 bei gleicher Form kleiner sind als die Flächenausnehmungen 6 einer angrenzenden zweiten inneren präkeramischen Papier- und/oder Pappstruktur 4. Dabei kann eine Mehrzahl von Flächenausnehmungen 5 einer ersten inneren präkeramischen Papier- und/oder Pappstruktur 3 mit einer größeren Flächenausnehmung 6 einer zweiten inneren präkeramischen Papier- und/oder Pappstruktur 4 strömungsleitend verbunden sein.

Gemäß den in den Fig. 6 und 7 dargestellten Ausführungsformen ist eine Durchströmung der aus dem Verbund erhältlichen Keramik auch lediglich in einer Strömungsrichtung Y₁ möglich. Gemäß Fig. 6 wird eine solche Strömungsleitung über eine Mehrzahl von Flächenausnehmungen 5 einer ersten präkeramischen Papier- und/oder Papplage 3 erreicht, die sich in Strömungsrichtung Y₁ erstrecken und über quer dazu angeordnete Flächenausnehmungen 6 einer zweiten präkeramischen Papier- und/oder Papplage miteinander kontaktiert sind. Gemäß Fig. 7 erstrecken sich alle Flächenausnehmungen 5, 6 in Strömungsrichtung Y₁, wobei ein Übertritt quer zur Strömungsrichtung Y₁ nicht möglich ist, da die Flächenausnehmungen 6 quer zur Durchströmungsrichtung Y₁ nicht strömungsleitend miteinander verbunden sind.

Fig. 9 zeigt eine bevorzugte Ausführungsform, wobei die Flächenausnehmungen 5, 6 von zwei inneren miteinander verbundenen präkeramischen Papier- und/oder Pappstrukturen 3, 4 gleich konturiert sind. Die Papier- und/oder Pappstrukturen 3, 4 weisen einen waben-, gitter- oder netzartigen Aufbau auf mit Stegen 7, die an Verbindungsstellen 8 zusammenlaufen. Sechseckige Flächenausnehmungen 5, 6 sind durch miteinander verbundene Stege 7 begrenzt. Die verbundenen Papier- und/oder Pappstrukturen 3, 4 können versetzt oder gedreht zueinander angeordnet sein. Vorzugsweise sind die Papier- und/oder Pappstrukturen 3, 4 so gegeneinander versetzt angeordnet, dass Verbindungsstellen 8 einer ersten inneren Papier- und/oder Pappstruktur 3 oberhalb von sechseckigen Flächenausnehmungen 6 einer darunter angeordneten zweiten inneren Papier- und/oder Pappstruktur 4 angeordnet sind. Dadurch wird ein sehr geringer Strömungswiderstand beim Durchströmen der aus den Papier- und/oder Pappstrukturen 3, 4 erhältlichen Keramik gewährleistet.

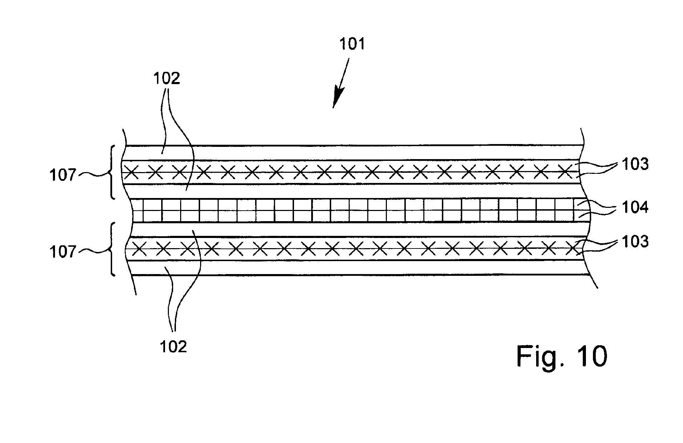

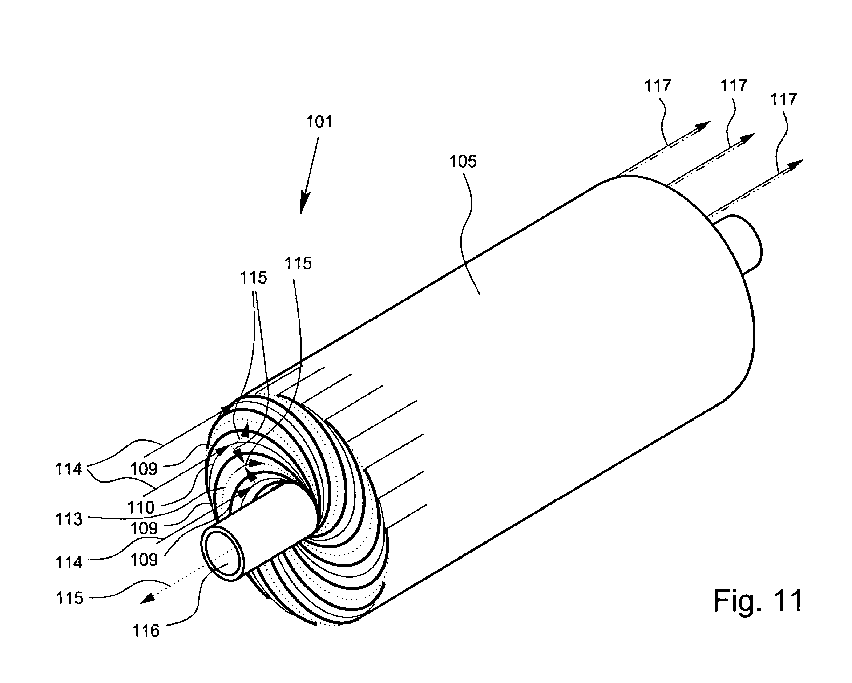

Fig. 10 zeigt schematisch den Aufbau eines Verbundes 101 mit mehreren präkeramischen Papier- und/oder Papplagen 102 bis 104, wobei durch Keramisierung des Verbundes 101 ein Keramikfilterkörper 105 eines in Fig. 11 dargestellten Filters 106 erhältlich ist. Der Verbund 101 weist mehrere Trennlagenanordnungen 107 auf, wobei jede Trennlagenanordnung 107 gebildet wird durch zwei Trennlagen 102 und vorliegend zwei zwischen den äußeren Trennlagen 102 angeordnete Zwischenlagen 103 als Abstandshalter für die äußeren Trennlagen 102. Die Trennlagen 102 bilden bei Keramisierung des Verbundes 101 Trennschichten 109 und die Zwischenlagen 103 zwischen zwei Trennlagen 102 jeweils eine gemeinsame Zwischenschicht 110 (Spacerschicht) und Durchströmungszone zwischen zwei benachbarten Trennschichten 109 im Keramikfilterkörper 105.

Wie sich weiter aus Fig. 10 ergibt, weist der Verbund 101 eine Mehrzahl von nebeneinanderliegenden Trennlagenanordnungen 107 auf, die über zwei zwischen den Trennlagenanordnungen 107 angeordnete weitere Zwischenlagen 104 als Abstandshalter für die Trennlagenanordnungen 107 miteinander verbunden sind. Die weiteren Zwischenlagen 104 bilden bei der Keramisierung eine weitere Zwischenschicht 113 (Drainageschicht) im Keramikfilterkörper 105.

Es versteht sich, dass der Verbund 101 auch mehr als zwei Zwischenlagen 103, 104 zwischen zwei benachbarten Trennlagen 102 und/oder mehrere unmittelbar miteinander verbundene Trennlagen 102 aufweisen kann. Die unmittelbar miteinander verbundenen Zwischenlagen 103, 104 können gleich oder auch unterschiedlich ausgebildet bzw. strukturiert sein und/oder eine gleiche oder unterschiedliche Dicke aufweisen.

Bei der dargestellten Ausführungsform ist vorgesehen, dass die Trennlagen 102 eine geschlossene Oberfläche aufweisen und die Zwischenlagen 103, 104 jeweils eine Mehrzahl von Flächenausnehmungen 111, 112 bzw. Öffnungen, wobei die Zwischenlagen 103, 104 in dem Verbund 101 oberseitig und/oder unterseitig mit wenigstens einer angrenzenden Trennlage 102 und/oder einer angrenzenden Zwischenlage 103, 104 vollflächig verbunden sind. Dadurch ergibt sich eine hohe Festigkeit des durch Keramisierung des Verbundes 101 erhältlichen Keramikfilterkörpers 105.

Zwei miteinander verbundenen Zwischenlagen 103, 104 weisen vorzugsweise komplementär zueinander ausgebildete und bereichsweise überlappende Flächenausnehmungen 111, 112 auf zur Bildung von verbundenen Hohlräumen, Leerstellen und Kanälen zwischen zwei Trennlagen 102. Bei der Keramisierung bleiben diese Hohlräume, Leerstellen und Kanäle erhalten und schaffen eine Durchströmungszone in einer Zwischenschicht 110, 113 des Keramikfilterkörpers 105 aus. Hierauf wird im Zusammenhang mit Fig. 11 weiter unten im Einzelnen eingegangen.

Insbesondere kann vorgesehen sein, dass die Zwischenlagen 103 einer Trennlagenanordnung 107 einerseits und die Zwischenlagen 104 zwischen zwei Trennlagenanordnungen 107 andererseits eine unterschiedliche Anzahl, Geometrie, Größe und Verteilung sowie Ausrichtung der Flächenausnehmungen 111, 112 und/oder eine unterschiedliche Dicke aufweisen. Es ist auch möglich, dass die Anzahl der Zwischenlagen 103 zwischen zwei Trennlagen 102 einer Trennlagenanordnung 107 und die Anzahl der Zwischenlagen 104 zwischen zwei benachbarten Trennlagenanordnungen 107 unterschiedlich groß ist.

In Fig. 11 ist ein Filter 101 mit einem Keramikfilterkörper 105 als Filterelement dargestellt, wobei der Keramikfilterkörper 105 erhältlich ist beispielsweise durch Keramisierung eines Verbundes 101 der in Fig. 10 beschriebenen Art. Der Keramikfilterkörper 105 weist mehrere Trennschichten 109 auf, die über Zwischenschichten 110 und weitere Zwischenschichten 113 voneinander getrennt sind. Die Trennschichten 109 und die Zwischenschichten 110, 113 sind spiralförmig um den Sammelkanal 116 angeordnet.

Zwei benachbarte Zwischenschichten 110, 113 sind jeweils durch eine Trennschicht 109 voneinander getrennt und vorzugsweise im Kreuzstrom durchströmbar. Ein zu filtrierendes Fluid 114 tritt an einer Stirnseite in den Keramikfilterkörper 105 ein und durchströmt die Zwischenschichten 110 in axialer Richtung. Die Zwischenschichten 110 dienen als Spacerschichten und sorgen für eine effektive Überströmung sowie optimale Verwirbelung des Fluides 114 an der inneren Oberfläche der Trennschichten 109. Dadurch wird die Deckschichtbildung an den Trennschichten 109 verringert. Infolge eines Druckgefälles permeiert ein Permeatstrom 115 durch die an die Zwischenschichten 110 angrenzenden Trennschichten 109 in die weiteren Zwischenschichten 113, die als Drainageschichten dafür sorgen, dass der Permeatstrom 115 zu einem Sammelkanal 116 geleitet wird und über den Sammelkanal 116 abfließt. Die Zwischenschichten 113 sind dazu strömungsleitend mit dem Sammelkanal 116 verbunden.

Die Zwischenschichten 110 können auch erhältlich sein durch einen Verbund, der auf der jeweiligen Feedseite der Trennlagen 102 verlorene Kerne aufweist, die aus einem nicht-keramisierbaren Papier- und/oder Pappmaterial oder Zellstoffgewebe oder -material bestehen, das bei der Keramisierung des Verbundes verbrennt, so dass die Zwischenschichten 110 als Hohlräume zwischen benachbarten Trennschichten 109 ausgebildet sind. Dadurch kann ein sehr geringer Druckverlust beim Durchströmen des Filters gewährleistet werden.

Die Umfangsfläche des Keramikfilterkörpers 105 ist vorzugsweise geschlossen ausgebildet, so dass hier kein Austritt von Permeat erfolgen kann. Dies kann durch eine entsprechende Beschichtung der Mantelfläche des Keramikfilterkörpers 105 erreicht werden. Auf der anderen Stirnseite tritt ein Retentatstrom 117 aus dem Keramikfilterkörper 105 aus.

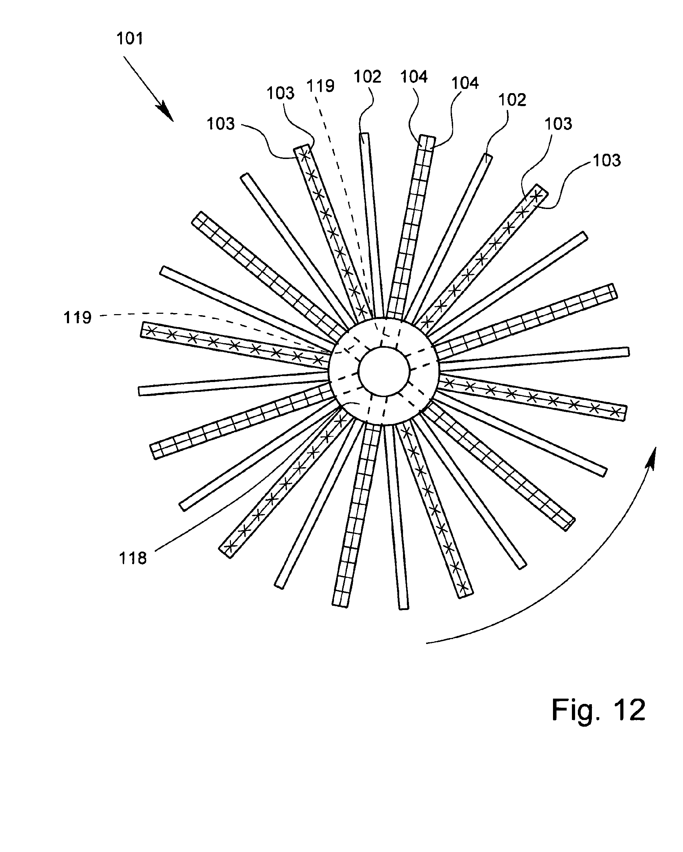

In Fig. 12 ist ein Verbund 101 mit einem Rohrkörper 118 dargestellt, der ebenfalls aus einem präkeramischen Papier- und/oder Pappmaterial besteht. Bei der Keramisierung bildet der Rohrkörper 118 einen rohrförmigen Bereich des Keramikfilterkörpers 105 aus, der einen Sammelkanal 116 des Keramikfilterkörpers 105 begrenzt. Die Trennlagen 102 und die Zwischenlagen 103, 104 sind spiralförmig um den Rohrkörper 118 gewickelt und werden zusammen mit dem Rohrkörper 118 keramisiert, so dass ein Keramikfilterkörper 105 mit spiralförmig verlaufenden Trennschichten 109 und Zwischenschichten 110, 113 erhalten wird.

Die Trennlagen 102 und die Zwischenlagen 103, 104 sind im Verbund 101 über den Umfang des Rohrkörpers 118 sternförmig verteilt angeordnet und an dem Rohrkörper 118 befestigt. Die Zwischenlagen 104 sind im Bereich von Öffnungen 119 des Rohrkörpers 118 mit diesem verbunden, wobei Hohlräume, Leerstellen und Kanäle in den Zwischenlagen 104 über die Öffnungen 119 mit dem Innenraum des Rohrkörpers 118 in einer offenen Verbindung stehen. Über die aus den Zwischenlagen 104 gebildeten Zwischenschichten 113 (Drainageschichten) und den Sammelkanal 116 des Keramikfilterkörpers 105 wird so eine Permeatabfuhr oder Fluidzufuhr ermöglicht.

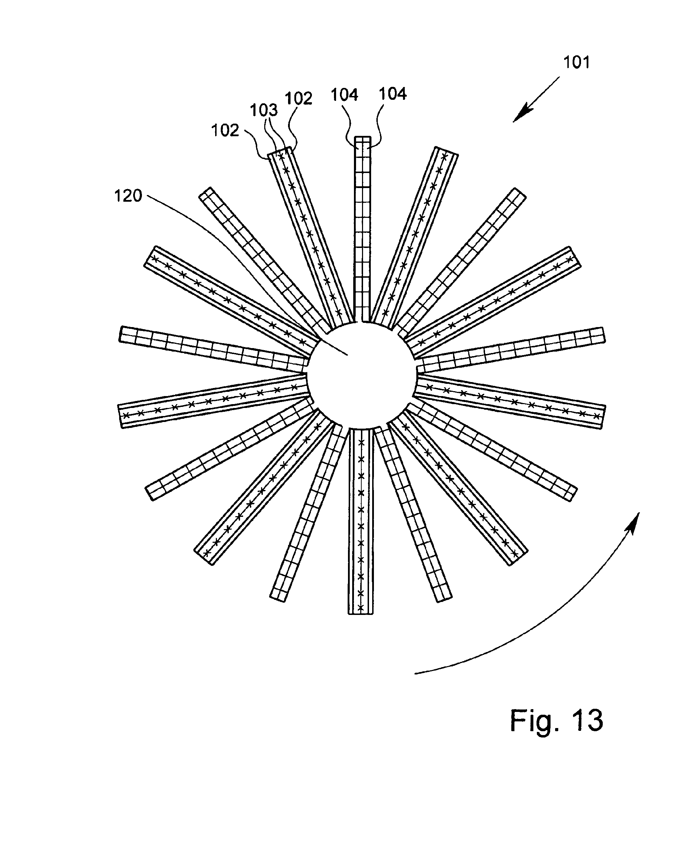

In Fig. 13 ist eine weitere Ausführungsform eines Verbundes 101 dargestellt, wobei die Trennlagen 102 und die Zwischenlagen 103, 104 in dem Verbund 101 sternförmig um einen zylindrischen Hohlraum 120 herum angeordnet sind. Der Hohlraum 120 kann gebildet werden durch spiralförmiges Aufwickeln der Trennlagen 102 und der Zwischenlagen 103, 104 auf einen Stab, der vor dem Keramisieren aus dem Verbund 101 herausgezogen wird. Die Trennlagen 102 und die Zwischenlagen 103, 104 sind an den einander zugewandten Enden seitlich miteinander verbunden, so dass ein im Wesentlichen geschlossener Hohlraum 120 geschaffen wird. Auch hier ist ein Fluidaustausch zwischen den bei der Keramisierung des Verbundes 101 aus den Zwischenlagen 104 gebildeten Zwischenschichten 113 des Keramikfilterkörpers 105 und einem aus dem Hohlraum 120 gebildeten Sammelkanal 116 möglich.

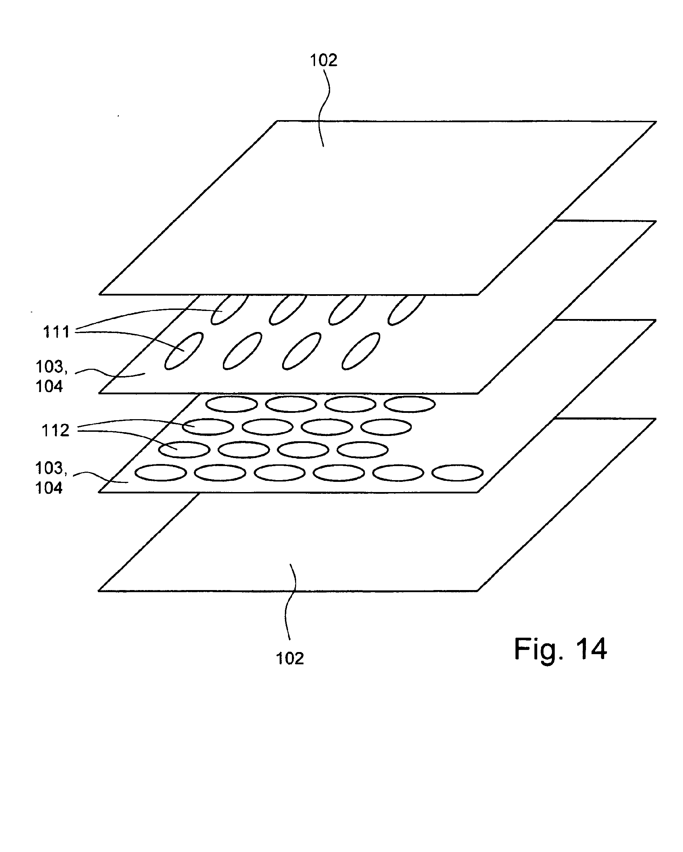

Fig. 14 zeigt eine Anordnung mit zwei äußeren Trennlagen 102 aus einem präkeramischen Papier- und/oder Pappmaterial und mit zwei inneren Zwischenlagen 103, 104 aus einem gleichen präkeramischen Papier- und/oder Pappmaterial, wobei die präkeramischen Papier- und/oder Papplagen insbesondere durch Verkleben zu einem Verbund zusammenzufügen sind. In dem Verbund bilden die beiden inneren Zwischenlagen 103, 104 einen Abstandshalter für die äußeren Trennlagen 102. Aus dem durch Zusammenfügen der Trennlagen 102 mit den Zwischenlagen 103, 104 erhältlichen Verbund lässt sich durch thermische Umsetzung der Papier- und/oder Pappstrukturen eine Keramik in an sich aus dem Stand der Technik bekannter Weise herstellen.

Gemäß Fig. 14 sind die Trennlagen 102 und die Zwischenlagen 103, 104 eben bzw. planar ausgebildet, was das formflächige Verbinden der Papier- und/oder Pappstrukturen miteinander, insbesondere durch Laminieren, erleichtert und eine hohe Festigkeit des Verbundes und damit des aus dem Verbund erhältlichen Keramikformkörpers gewährleistet. Es ist möglich, dass der Verbund nach dem Verbinden der Papier- und/oder Pappstrukturen und vor dem Keramisieren als solcher einem Formgebungsverfahren unterzogen wird, um eine bestimmte in der Verbundstruktur abgebildete Form der Keramik zu erhalten.

Wie sich weiter aus Fig. 14 ergibt, weisen die Zwischenlagen 103, 104 eine Mehrzahl von Flächenausnehmungen 111, 112 auf, die gemäß Fig. 10 regelmäßig angeordnet sind und eine gleiche Größe und Form aufweisen können. Durch die Flächenausnehmungen 111, 112 wird zum einen ein geringes Gewicht des aus den Papier- und/oder Pappstrukturen erhältlichen Verbundes und damit der erhältlichen Keramik erreicht. Die Flächenausnehmungen 111 einer ersten oberen Zwischenlage 103, 104 und die Flächenausnehmungen 112 einer zweiten unteren Zwischenlage 103, 104 sind um 90° gedreht zueinander angeordnet. Die verbleibenden Oberflächen der Zwischenlagen 103, 104 werden miteinander und mit den äußeren Trennlagen 102 verklebt, so dass eine hohe Festigkeit des Verbundes und damit der aus dem Verbund erhältlichen Keramik erreicht wird. Die Anzahl der inneren Zwischenlagen 103, 104 kann beliebig gewählt sein, um einen bestimmten Abstand zwischen den äußeren Trennlagen 102 und damit eine bestimmte Dicke und Stabilität des Verbundes 101 zu erreichen.

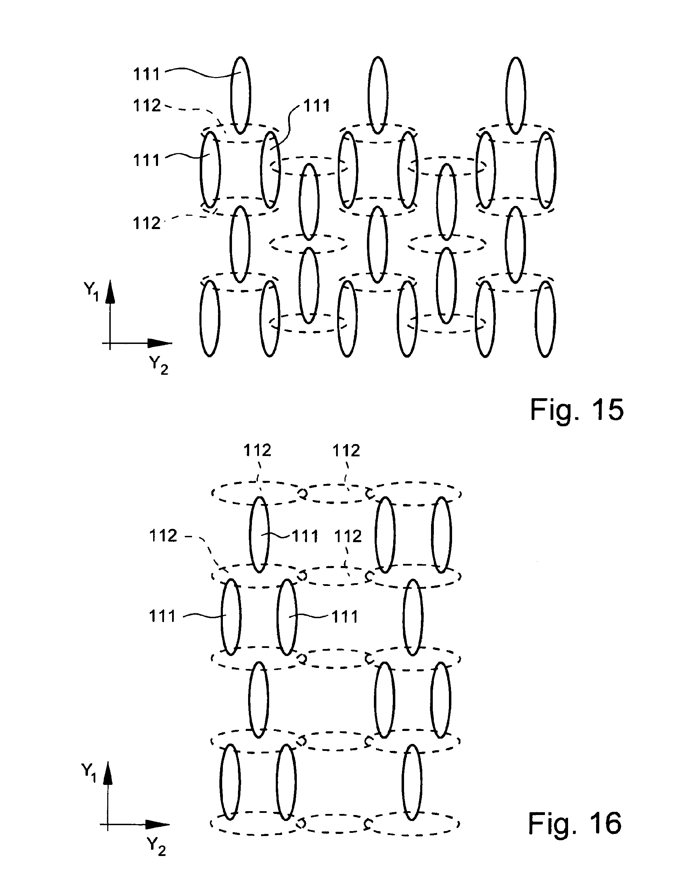

Wie sich aus den Fig. 15 bis 22 ergibt, können die Flächenausnehmungen 111 in einer ersten Zwischenlage 103, 104 und die Flächenausnehmungen 112 in einer verbundenen zweiten Zwischenlage 103, 104 komplementär ausgebildet und in einem Verbund 101 bereichsweise übereinanderliegend angeordnet sein. Durch die überlappenden Flächenausnehmungen 111, 112 werden miteinander verbundene Hohlräume, Leerstellen und Kanäle in den verbundenen Zwischenlagen 103, 104 gebildet, die bei der Keramisierung des Verbundes 101 erhalten bleiben. Vorzugsweise ist es dabei so, dass eine Durchströmung der so erhältlichen Keramikstruktur in wenigstens zwei Raumrichtungen Y₁, Y₂ möglich ist.

Die Flächenausnehmungen 111 einer ersten Zwischenlage 103, 104 erstrecken sich gemäß Fig. 15 und Fig. 16 in Strömungsrichtung Y₁, während sich die Flächenausnehmungen 112 einer angrenzenden zweiten Zwischenlage 103, 104 quer dazu in Strömungsrichtung Y₂ erstrecken. Die Flächenausnehmungen 111 werden dabei über die quer dazu verlaufenden Flächenausnehmungen 112 miteinander verbunden und umgekehrt. Dadurch werden Fluidkanäle in der Filterkeramik in beiden Strömungsrichtungen Y₁, Y₂ geschaffen.

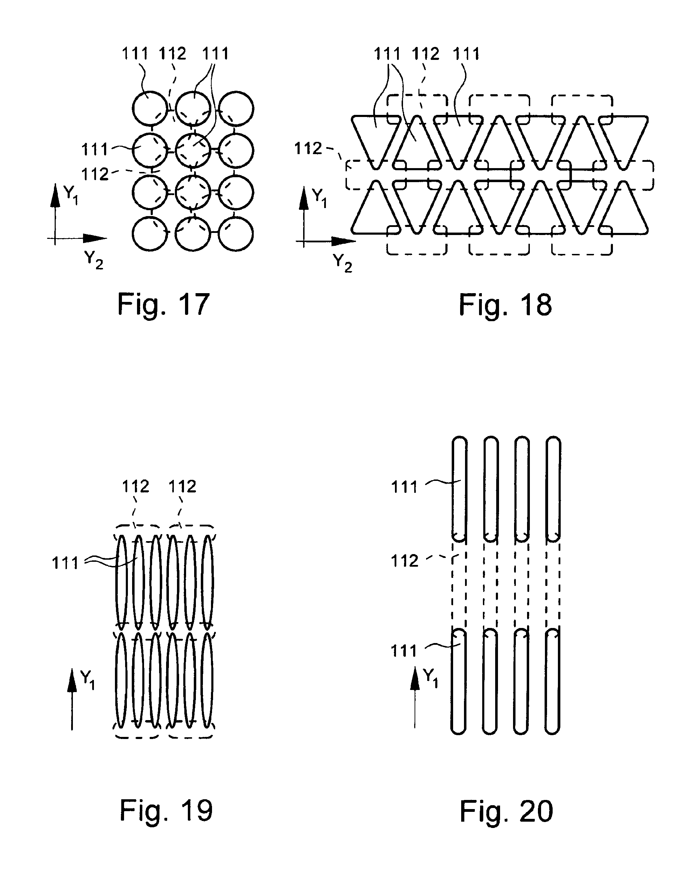

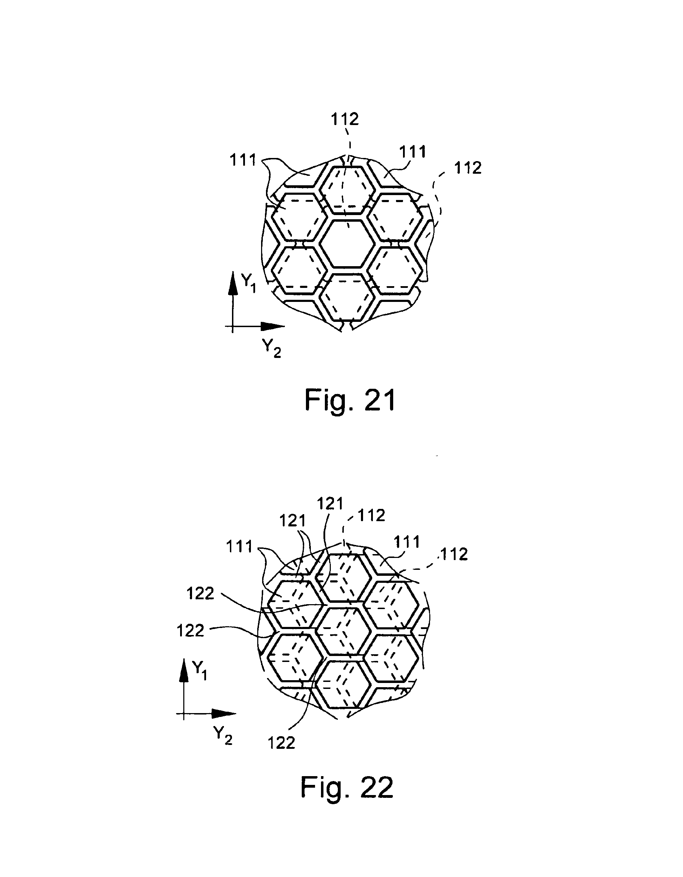

Wie sich weiter aus den Fig. 15 bis 22 ergibt, können die Flächenausnehmungen 111, 112 einer Zwischenlage 103, 104 regelmäßig verteilt angeordnet sein. Gemäß den Fig. 15, 16 und 19 sind die Flächenausnehmungen 111, 112 langgestreckt und ellipsenförmig ausgebildet. Gemäß Fig. 20 sind die Flächenausnehmungen 111, 112 als Langlöcher ausgebildet. Gemäß Fig. 17 können die Ausnehmungen 111, 112 auch kreisförmig sein. Gemäß den Fig. 18 und 21 können die Ausnehmungen 111, 112 und 113 auch rechteckförmig, dreieckförmig oder wabenförmig ausgebildet sein.

Die in Fig. 18 dargestellte Ausführungsform mit abwechselnd angeordneten dreieckförmigen Flächenausnehmungen 111 einer ersten Zwischenlage 103, 104 und rechteckförmigen Flächenausnehmungen 112 einer zweiten Zwischenlage 103, 104 sowie die in Fig. 21 und 22 gezeigten Ausführungsformen mit sechseckigen bzw. wabenförmigen Flächenausnehmungen 111, 112 zeichnen sich bei entsprechend größeren Hohlräumen und Öffnungen in den verbundenen Zwischenlagen 103, 104 durch eine vergleichsweise geringe Gesamtverbindungsfläche zwischen den Zwischenlagen 103, 104 und den Trennlagen 102 aus.

Darüber hinaus sind die Flächenausnehmungen einer Zwischenlage 103, 104 vorzugsweise gleich konturiert. Bei den in den Fig. 14 und 15 dargestellten Ausführungsformen sind die Flächenausnehmungen 111, 112 gleich konturiert. Gleiches gilt für die in Fig. 20 und 22 dargestellten Ausführungsformen.

Wie sich aus den Fig. 17, 18, 19 und 21 ergibt, können die Flächenausnehmungen 111, 112 der beiden Zwischenlagen 103, 104 auch unterschiedlich konturiert sein, insbesondere eine unterschiedliche Größe aufweisen. Beispielsweise ist bei den in den Fig. 17 und 21 dargestellten Ausführungsformen vorgesehen, dass die Flächenausnehmungen 111 einer ersten Zwischenlage 103, 104 bei gleicher Form kleiner sind als die Flächenausnehmungen 112 einer angrenzenden zweiten Zwischenlage 103, 104. Dabei kann jeweils eine Mehrzahl von Flächenausnehmungen 111 mit einer größeren Flächenausnehmung 112 verbunden sein.

Gemäß den in den Fig. 19 und 20 dargestellten Ausführungsformen kann durch eine bestimmte Ausrichtung der Flächenausnehmungen 111, 112 auch eine Durchströmung einer Zwischenschicht 110, 113 in dem Keramikfilterkörper 105 lediglich in einer Strömungsrichtung Y₁ möglich sein. Gemäß Fig. 19 folgt dies aus den in Strömungsrichtung Y₁ angeordneten Flächenausnehmungen 111 und quer dazu angeordneten Flächenausnehmungen 112. Die Flächenausnehmungen 112 verbinden jeweils lediglich einen Teil der nebeneinanderliegenden Flächenausnehmungen 111, so dass eine Strömungsleitung quer zur Strömungsrichtung Y₁ nur über einen geringen Bereich der miteinander verbundenen Zwischenlagen 103, 104 möglich ist. Gemäß Fig. 20 erstrecken sich alle Flächenausnehmungen 111, 112 in Strömungsrichtung Y₁, wobei ein Fluidübertritt von einer Flächenausnehmung 111 in eine benachbarte Flächenausnehmung 111 quer zur Strömungsrichtung Y₁ nicht möglich ist.

Fig. 22 zeigt eine bevorzugte Ausführungsform, wobei die Flächenausnehmungen 111, 112 beider Zwischenlagen 103, 104 gleich konturiert sind. Die Zwischenlagen 103, 104 weisen einen waben- oder netzförmigen Aufbau auf mit Stegen 121, deren Verbindungsstellen 122 Eckpunkte der Flächenausnehmungen 111, 112 bilden. Die miteinander verbundenen Lagen 103, 104 können versetzt oder gedreht zueinander angeordnet sein. Vorzugsweise sind die Lagen 103, 104 so gegeneinander versetzt oder gedreht angeordnet, dass zumindest einige Verbindungsstellen 122 einer oberen ersten Zwischenlage 103, 104 oberhalb von den Flächenausnehmungen 112 bzw. Öffnungen in einer darunter angeordneten zweiten Zwischenlage 103, 104 angeordnet sind. Dadurch wird ein sehr geringer Strömungswiderstand beim Durchströmen einer Zwischenschicht 110, 113 gewährleistet.

## Patentansprüche

1. Keramik erhältlich aus einem Verbund von wenigstens zwei äußeren präkeramischen Papier- und/oder Pappstrukturen (1, 2) als Deckschichten und wenigstens einer inneren präkeramischen Papier- und/oder Pappstruktur (3, 4) als Zwischenschicht und Abstandshalter für die äußeren präkeramischen Papier- und/oder Pappstrukturen (1, 2), **dadurch gekennzeichnet, dass** die innere präkeramische Papier- und/oder Pappstruktur (3, 4) in dem Verbund oberseitig und/oder unterseitig vollflächig mit wenigstens einer äußeren präkeramischen Papier- und/oder Pappstruktur (1, 2) und/oder mit wenigstens einer weiteren inneren präkeramischen Papier- und/oder Pappstruktur (3, 4) verbunden ist und dass die innere präkeramische Papier- und/oder Pappstruktur (3, 4) eine Mehrzahl von Flächenausnehmungen (5, 6) aufweist.

2. Keramik nach Anspruch 1, **dadurch gekennzeichnet, dass** der Verbund wenigstens zwei vollflächig miteinander verbundene innere präkeramische Papier- und/oder Pappstrukturen (3, 4) aufweist.

3. Keramik nach Anspruch 2, **dadurch gekennzeichnet, dass** die Flächenausnehmungen (5) einer ersten inneren präkeramischen Papier- und/oder Pappstruktur (3) des Verbundes und die Flächenausnehmungen (6) einer angrenzenden zweiten inneren präkeramischen Papier- und/oder Pappstruktur (4) des Verbundes komplementär ausgebildet sind, so dass in dem Verbund mit zwei angrenzenden inneren präkeramischen Papier- und/oder Pappstrukturen (3, 4) die Flächenausnehmungen in angrenzenden inneren präkeramischen Papier- und/oder Pappstrukturen bereichsweise übereinanderliegend angeordnet sind.

4. Keramik nach einem der vorhergehenden Ansprüche, **dadurch gekennzeichnet, dass** die Flächenausnehmungen (5, 6) strömungsleitend miteinander verbunden sind, wobei, vorzugsweise, die Flächenausnehmungen (5) einer ersten inneren präkeramischen Papier- und/oder Pappstruktur (3) des Verbundes und die Flächenausnehmungen (6) einer angrenzenden zweiten inneren präkeramischen Papier- und/oder Pappstruktur (4) des Verbundes miteinander verbundene Strömungsleitkanäle in der Keramik bilden.

5. Keramik nach einem der vorhergehenden Ansprüche, **dadurch gekennzeichnet, dass** die Dicke der präkeramischen Papier- und/oder Pappstruktur (1 - 4) zwischen 0,1 bis 2,0 mm, vorzugsweise zwischen 0,4 bis 0,6 mm, beträgt, wobei, vorzugsweise, die Dicke der inneren präkeramischen Papier- und/oder Pappstruktur (3, 4) der Dicke einer äußeren präkeramischen Papier- und/oder Pappstruktur (1, 2) entspricht, und/oder dass die Flächenausnehmungen (5, 6) regelmäßig verteilt sind und/oder dass die Flächenausnehmungen (5, 6) kreis-, ellipsen- oder polygonförmig sind.

6. Keramik nach einem der vorhergehenden Ansprüche, **dadurch gekennzeichnet, dass** die Flächenausnehmungen (5, 6) einer ersten inneren präkeramischen Papier- und/oder Pappstruktur (3, 4) des Verbundes eine gleiche Kontur aufweisen und/oder dass die Flächenausnehmungen (5) einer ersten inneren präkeramischen Papier- und/oder Pappstruktur (3) des Verbundes und die Flächenausnehmungen (6) einer zweiten inneren präkeramischen Papier- und/oder Pappstruktur (4) des Verbundes eine gleiche Kontur aufweisen.

7. Keramik nach einem der vorhergehenden Ansprüche, **dadurch gekennzeichnet, dass** die Flächenausnehmungen (5) einer ersten inneren präkeramischen Papier- und/oder Pappstruktur (3) des Verbundes kleiner sind als die Flächenausnehmungen (6) einer angrenzenden zweiten inneren präkeramischen Papier- und/oder Pappstruktur (4) des Verbundes, wobei eine Mehrzahl von Flächenausnehmungen der ersten inneren präkeramischen Papier- und/oder Pappstruktur mit wenigstens einer Flächenausnehmung der zweiten inneren präkeramischen Papier- und/oder Pappstruktur strömungsleitend verbunden ist.

8. Leichtbauteil mit einer Keramik nach einem der vorhergehenden Ansprüche 1 bis 7.

9. Filter mit einer Keramik nach einem der vorhergehenden Ansprüche 1 bis 7.

10. Filter (106) mit wenigstens einem Keramikfilterkörper (105) als Filterelement, wobei der Keramikfilterkörper (105) erhältlich ist durch Keramisierung eines mehrlagigen Verbundes (101) von flächigen präkeramischen Papier- und/oder Papplagen (102 - 104), **dadurch gekennzeichnet, dass** der Verbund (101) wenigstens eine Trennlagenanordnung (107) mit wenigstens einer Trennlage (102) aus einem präkeramischen Papier- und/oder Pappmaterial und wenigstens einer mit der Trennlage (102) verbundenen Zwischenlage (103, 104) aus einem präkeramische Papier- und/oder Pappmaterial als Abstandshalter für die Trennlage (102) aufweist, wobei die Trennlage (102) bei Keramisierung des Verbundes (101) eine Trennschicht (109) und die wenigstens eine Zwischenlage (103, 104) eine Zwischenschicht (110) und Durchströmungszone im Keramikfilterkörper (105) bildet, wobei die Trennlage (102) auf den Flachseiten geschlossen ist und die Zwischenlage (103, 104) eine Mehrzahl von Flächenausnehmungen (111, 112) aufweist und mit der Trennlage (102) oberseitig oder unterseitig vollflächig verbunden ist.

11. Filter nach Anspruch 10, **dadurch gekennzeichnet, dass** der Verbund (101) eine Mehrzahl von nebeneinander liegenden Trennlagenanordnungen (107) aufweist, wobei jede Trennlagenanordnung (107) jeweils wenigstens zwei Trennlagen (102) und wenigstens eine Zwischenlage (103, 104) zwischen den Trennlagen (102) aufweist und wobei benachbarte Trennlagenanordnungen (107) über wenigstens eine zwischen den Trennlagenanordnungen (107) angeordnete weitere Zwischenlage (104) als Abstandshalter für die Trennlagenanordnungen (107) verbunden sind.

12. Filter nach Anspruch 10 oder 11, **dadurch gekennzeichnet, dass** benachbarte Zwischenschichten (110, 113) des Keramikfilterkörpers (102) durch eine Trennschicht (109) voneinander getrennt und vorzugsweise im Kreuzstrom durchströmbar sind und/oder dass zwischen wenigstens zwei Trennlagen (102) des Verbundes (101) wenigstens zwei miteinander verbundene Zwischenlagen (103, 104) vorgesehen sind, wobei, vorzugsweise, die miteinander verbundenen Zwischenlagen (103, 104) komplementär zueinander ausgebildete und bereichsweise überlappende Flächenausnehmungen (111, 112) aufweisen zur Bildung wenigstens eines Strömungskanals zwischen den Trennlagen (102).

13. Filter nach einem der vorhergehenden Ansprüche 10 bis 12, **dadurch gekennzeichnet, dass** der Keramikfilterkörper (105) einen sich in axialer Richtung erstreckenden Sammelkanal (116) aufweist und dass Trennschichten (109) und Zwischenschichten (110, 113) über den Umfang des Sammelkanals (116) verteilt angeordnet, vorzugsweise spiralförmig um den Sammelkanal (116) gewickelt angeordnet, sind und/oder dass der Sammelkanal (116) strömungsleitend mit wenigstens einer Zwischenschicht (113) verbunden ist.

14. Filter nach Anspruch 13, **dadurch gekennzeichnet, dass** der Verbund (101) einen Rohrkörper (118) aus einem präkeramischen Papier- und/oder Pappmaterial aufweist, wobei die Trennlagen (102) und die Zwischenlagen (103, 104) über den Umfang des Rohrkörpers (118) verteilt angeordnet und an dem Rohrkörper (118) befestigt sind, oder dass der Verbund (101) einen rohrförmigen Grünkörper aufweist, wobei die Trennlagen (102) und die Zwischenlagen (103, 104) über den Umfang des Grünkörpers verteilt angeordnet und an dem Grünkörper befestigt sind, oder dass die Trennlagen (102) und die Zwischenlagen (103, 104) in dem Verbund (101) um einen Hohlraum (120) angeordnet, vorzugsweise spiralförmig um den Hohlraum (120) gewickelt sind, wobei der Hohlraum (120) von den Trennlagen (102) und den Zwischenlagen (103, 104) begrenzt wird.

15. Filter (101) mit einem Keramikfilterkörper (105) als Filterelement, insbesondere nach einem der vorhergehenden Ansprüche 10 bis 14, wobei der Keramikfilterkörper (105) erhältlich ist durch Keramisierung eines Verbundes (101) von mehreren spiralförmig aufgewickelten flächigen präkeramischen Papier- und/oder Papplagen (102, 103, 104).

## Claims

1. A ceramic obtainable from a composite of at least two outer preceramic paper and/or card structures (1, 2) as top layers and at least one inner preceramic paper and/or card structure (3, 4) as an intermediate layer and spacer for the outer preceramic paper and/or card structures (1, 2), **characterised in that**, the inner preceramic paper and/or card structure (3, 4) in the composite is connected on the upper face and/or lower face over the full surface area with at least one outer preceramic paper and/or card structure (1, 2), and/or with at least one other inner preceramic paper and/or card structure (3, 4), and **in that** the inner preceramic paper and/or card structure (3, 4) has a multiplicity of surface openings (5, 6).

2. The ceramic according to claim 1, **characterised in that**, the composite has at least two inner preceramic paper and/or card structures (3, 4) that are connected with one another over the full surface area.

3. The ceramic according to claim 2, **characterised in that**, the surface openings (5) of a first inner preceramic paper and/or card structure (3) and the surface openings (6) of an adjacent second inner preceramic paper and/or card structure (4) of the composite are designed in a complementary manner, such that in the composite with two adjacent inner preceramic paper and/or card structures (3, 4) the surface openings in adjacent inner preceramic paper and/or card structures are arranged such that they are superimposed in some regions.

4. The ceramic according to any one of the preceding claims, **characterised in that**, the surface openings (5, 6) are connected with one another in a flow conducting manner, wherein the surface openings (5) of a first inner preceramic paper and/or card structure (3) of the composite and the surface openings (6) of an adjacent second inner preceramic paper and/or card structure (4) of the composite preferably form flow conducting channels in the ceramic that are connected with one another.

5. The ceramic according to any one of the preceding claims, **characterised in that**, the thickness of the preceramic paper and/or card structure (1 - 4) is between 0.1 and 2.0 mm, preferably between 0.4 and 0.6 mm, wherein the thickness of the inner preceramic paper and/or card structure (3, 4) preferably corresponds to the thickness of an outer preceramic paper and/or card structure (1, 2), and/or **in that** the surface openings (5, 6) are regularly distributed, and/or **in that** the surface openings (5, 6) are circular, elliptical, or polygonal in shape.

6. The ceramic according to any one of the preceding claims, **characterised in that**, the surface openings (5, 6) of a first inner preceramic paper and/or card structure (3, 4) of the composite have the same contour, and/or the surface openings (5) of a first inner preceramic paper and/or card structure (3) of the composite and the surface openings (6) of a second inner preceramic paper and/or card structure (4) of the composite have the same contour.

7. The ceramic according to any one of the preceding claims, **characterised in that**, the surface openings (5) of a first inner preceramic paper and/or card structure (3) of the composite are smaller than the surface openings (6) of an adjacent second inner preceramic paper and/or card structure (4) of the composite, wherein a multiplicity of surface openings of the first inner preceramic paper and/or card structure are connected with at least one surface opening of the second inner preceramic paper and/or card structure in a flow conducting manner.

8. A lightweight component with a ceramic according to any one of the preceding claims 1 to 7.

9. A filter with a ceramic according to any one of the preceding claims 1 to 7.

10. A filter (106) with at least one ceramic filter body (105) as a filter element, wherein the ceramic filter body (105) is obtainable by the ceramicisation of a multi-ply composite (101) of two-dimensional preceramic paper and/or card plies (102 - 104), **characterised in that**, the composite (101) has at least one separating ply arrangement (107) with at least one separating ply (102) of a preceramic paper and/or card material and at least one intermediate ply (103, 104) of a preceramic paper and/or card material connected with the separating ply (102) as a spacer for the separating ply (102), wherein with the ceramicisation of the composite (101) the separating ply (102) forms a separating layer (109) and the at least one intermediate ply (103, 104) forms an intermediate layer (110) and a through-flow zone in the ceramic filter body (105), wherein the separating ply (102) is closed on the flat sides, and the intermediate ply (103, 104) has a multiplicity of surface openings (111, 112) and on the upper or lower face is connected with the separating ply (102) over the full surface area.

11. The filter according to claim 10, **characterised in that**, the composite (101) has a multiplicity of separating ply arrangements (107) located side-by-side, wherein each separating ply arrangement (107) in each case has at least two separating plies (102) and at least one intermediate ply (103, 104) between the separating plies (102), and wherein neighbouring separating ply arrangements (107) are connected via at least one other intermediate ply (104) arranged between the separating ply arrangements (107) as a spacer for the separating ply arrangements (107).

12. The filter according to claim 10 or 11, **characterised in that**, neighbouring intermediate layers (110, 113) of the ceramic filter body (105) are separated from one another by a separating layer (109), and flow can preferably pass through them in cross-flow, and/or **in that** between at least two separating plies (102) of the composite (101) at least two intermediate plies (103, 104) are provided that are connected with one another, wherein the intermediate plies (103, 104) that are connected with one another preferably have surface openings (111, 112) that are designed to be complementary to one another and to overlap in some regions so as to form at least one flow passage between the separating plies (102).

13. The filter according to any one of the preceding claims 10 to 12, **characterised in that**, the ceramic filter body (105) has a collector channel (116) extending in the axial direction, and **in that** separating layers (109) and intermediate layers (110, 113) are arranged distributed over the periphery of the collector channel (116), and are preferably arranged wound spirally around the collector channel (116), and/or **in that** the collector channel (116) is connected with at least one intermediate layer (113) in a flow conducting manner.

14. The filter according to claim 13, **characterised in that** the composite (101) has a tubular body (118) of a preceramic paper and/or card material, wherein the separating plies (102) and the intermediate plies (103, 104) are arranged distributed over the periphery of the tubular body (118) and are attached to the tubular body (118), or **in that** the composite (101) has a tubular green body, wherein the separating plies (102) and the intermediate plies (103, 104) are arranged distributed over the periphery of the green body and are attached to the green body, or **in that** the separating plies (102) and the intermediate plies (103, 104) in the composite (101) are arranged around a cavity (120), and are preferably wound spirally around the cavity (120), wherein the cavity (120) is bounded by the separating plies (102) and the intermediate plies (103, 104).

15. A filter (101) with a ceramic filter body (105) as a filter element, in particular according to any one of the preceding claims 10 to 14, wherein the ceramic filter body (105) is obtainable by the ceramicisation of a composite (101) of a plurality of spirally wound two-dimensional preceramic paper and/or card plies (102, 103, 104).

## Revendications

1. Céramique pouvant être obtenue à partir d'un composite d'au moins deux structures extérieures précéramiques en papier et/ou carton (1, 2) faisant office de couches de couverture et d'au moins une structure intérieure précéramique en papier et/ou carton (3, 4) faisant office de couche intercalaire et d'entretoise pour les structures extérieures précéramiques en papier et/ou carton (1, 2), **caractérisée en ce que** la structure intérieure précéramique en papier et/ou carton (3, 4) du composite est reliée par le haut et/ou par le bas sur toute sa surface à au moins une structure extérieure précéramique en papier et/ou carton (1, 2) et/ou au moins une autre structure intérieure précéramique en papier et/ou carton (3, 4) et que la structure intérieure précéramique en papier et/ou carton (3, 4) présente une pluralité d'évidements de surface (5, 6).

2. Céramique selon la revendication 1, **caractérisée en ce que** le composite présente au moins deux structures intérieures précéramiques en papier et/ou carton (3, 4) reliées ensemble par toute leur surface.

3. Céramique selon la revendication 2, **caractérisée en ce que** les évidements de surface (5) d'une première structure intérieure précéramique en papier et/ou carton (3) du composite et les évidements de surface (6) d'une seconde structure intérieure précéramique en papier et/ou carton adjacente (4) du composite sont de forme complémentaire, de sorte que, dans le composite comportant deux structures intérieures précéramiques en papier et/ou carton adjacentes (3, 4), les évidements de surface sont pratiqués superposés par endroits dans les structures intérieures précéramiques en papier et/ou carton adjacentes.

4. Céramique selon une des revendications précédentes, **caractérisée en ce que** les évidements de surface (5, 6) sont reliés entre eux en conduisant l'écoulement, sachant que les évidements de surface (5) d'une première structure intérieure précéramique en papier et/ou carton (3) du composite et les évidements de surface (6) d'une seconde structure intérieure précéramique en papier et/ou carton adjacente (4) du composite constituent de préférence des canaux conducteurs d'écoulement reliés entre eux dans la céramique.

5. Céramique selon une des revendications précédentes, **caractérisée en ce que** l'épaisseur de la structure précéramique en papier et/ou carton (1 - 4) est comprise entre 0,1 à 2,0 mm, de préférence entre 0,4 et 0,6 mm, l'épaisseur de la structure intérieure précéramique en papier et/ou carton (3, 4) équivalant de préférence à l'épaisseur d'une structure extérieure précéramique en papier et/ou carton (1, 2) et/ou que les évidements de surface (5, 6) sont répartis régulièrement et/ou que les évidements de surface (5, 6) sont de forme circulaire, elliptique et/ou polygonale.

6. Céramique selon une des revendications précédentes, **caractérisée en ce que** les évidements de surface (5, 6) d'une première structure intérieure précéramique en papier et/ou carton (3, 4) du composite présentent un contour identique et/ou que les évidements de surface (5) d'une première structure intérieure précéramique en papier et/ou carton (3) du composite et les évidements de surface (6) d'une seconde structure intérieure précéramique en papier et/ou carton (4) du composite présentent un contour identique.

7. Céramique selon une des revendications précédentes, **caractérisée en ce que** les évidements de surface (5) d'une première structure intérieure précéramique en papier et/ou carton (3) du composite sont plus petits que les évidements de surface (6) d'une seconde structure intérieure précéramique en papier et/ou carton (4) du composite, une pluralité d'évidements de surface de la première structure intérieure précéramique en papier et/ou carton étant reliée à au moins un évidement de surface de la seconde structure intérieure précéramique en papier et/ou carton en conduisant l'écoulement.

8. Pièce de construction légère contenant une céramique selon une des revendications précédentes 1 à 7.

9. Filtre contenant une céramique selon une des revendications précédentes 1 à 7.

10. Filtre (106) comprenant au moins un corps de filtration céramique (105) faisant office d'élément filtrant, le corps de filtration céramique (105) pouvant être obtenu par céramisation d'un feuilleté (101) de couches précéramiques membranaires en papier et/ou carton (102 - 104), **caractérisé en ce que** le composite (101) présente au moins un système de couches séparatrices (107) comprenant au moins une couche séparatrice (102) en matériau de papier et/ou carton précéramique et au moins une couche intercalaire (103, 104) reliée à la couche séparatrice (102) en matériau de papier et/ou carton précéramique faisant office d'entretoise pour la couche séparatrice (102), la couche séparatrice (102) constituant, lors de la céramisation du composite (101), une couche séparatrice (109) et l'au moins une couche intermédiaire (103, 104) une couche intercalaire (110) et une zone d'écoulement dans le corps de filtration céramique (105), la couche séparatrice (102) étant fermée sur les côtés plats et la couche intercalaire (103, 104) présentant une pluralité d'évidements de surface (111, 112) et étant reliée par le haut ou par le bas sur toute sa surface à la couche séparatrice (102).

11. Filtre selon la revendication 10, **caractérisé en ce que** le composite (101) présente une pluralité de systèmes de couches séparatrices juxtaposés (107), chaque système de couches séparatrices (107) présentant respectivement au moins deux couches séparatrices (102) et au moins une couche intercalaire (103, 104) entre les couches séparatrices (102) et les systèmes de couches séparatrices voisins (107) étant reliés par au moins une autre couche intercalaire (104) disposée entre les systèmes de couches séparatrices (107) en faisant office d'entretoise pour les systèmes de couches séparatrices juxtaposés (107).

12. Filtre selon la revendication 10 ou 11, **caractérisé en ce que** les couches intercalaires voisines (110, 113) du corps de filtration céramique (105) sont séparées les unes des autres par une couche séparatrice (109) et peuvent être traversées de préférence en écoulement croisé et/ou que, entre au moins deux couches séparatrices (102) du composite (101), il est prévu au moins deux couches intercalaires (103, 104) reliées entre elles, les couches intercalaires (103, 104) reliées entre elles présentant de préférence des évidements de surface (111, 112) de forme complémentaire et se chevauchant par endroits pour former au moins un canal d'écoulement entre les couches séparatrices (102).

13. Filtre selon une des revendications précédentes 10 à 12, **caractérisé en ce que** le corps de filtration céramique (105) présente un canal collecteur (116) s'étendant dans le sens axial et que les couches séparatrices (109) et les couches intercalaires (110, 113) sont disposées réparties sur la circonférence du canal collecteur (116), de préférence enroulées en spirale autour du canal collecteur (116) et/ou que le canal collecteur (116) est reliée en conduisant l'écoulement à au moins une couche intercalaire (113).

14. Filtre selon la revendication 13, **caractérisé en ce que** le composite (101) présente un corps tubulaire (118) en matériau de papier et/ou carton précéramique, les couches séparatrices (102) et les couches intercalaires (103, 104) étant disposées réparties sur la circonférence du corps tubulaire (118) et fixées au corps tubulaire (118), ou que le composite (101) présente un corps vert de forme tubulaire, les couches séparatrices (102) et les couches intercalaires (103, 104) étant disposées réparties sur la circonférence du corps vert et étant fixées au corps vert, ou que les couches séparatrices (102) et les couches intercalaires (103, 104) sont disposées dans le composite (101) autour d'une cavité (120), de préférence sont enroulées en spirale autour de la cavité (120), la cavité (120) étant limitée par les couches séparatrices (102) et les couches intercalaires (103, 104).

15. Filtre (101) comportant un corps de filtration céramique (105), en particulier selon une des revendications précédentes 10 à 14, le corps de filtration céramique (105) pouvant être obtenu par céramisation d'un composite (101) de plusieurs couches de papier et/ou de carton précéramiques membranaires enroulées en spirale (102, 103, 104).
